# EUROPEAN PATENT APPLICATION

(11) **EP 4 738 961 A1**
(43) Date of publication of application: **06.05.2026**
(21) Application number: 23943027.5
(22) Date of filing: 30.06.2023
(51) Int. Cl.: H04W 72/1268

(54) **UPLINK TRANSMISSION SCHEDULING METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/105363
(87) International publication number: WO 2025/000534

(57) **Abstract**

The present disclosure provides an uplink transmission scheduling method and apparatus, a device, and a storage medium. The method comprises: determining that an uplink transmission occupies a first time unit and a second time unit; and determining frequency domain resources occupied by the uplink transmission in the first time unit and/or the second time unit. The method of the present disclosure can prevent, as far as possible, uplink resources in a UL slot from being partitioned, and reduce excessive fragmentation of the uplink resources, thereby improving the system performance.

## Description

### TECHNICAL FIELD

The present disclosure relates to the field of communication technologies, and in particular to a method and an apparatus for uplink (UL) transmission scheduling, a communication device, a communication system, and a storage medium.

### BACKGROUND

A network device may configure an uplink (UL) subband for UL transmission within a downlink (DL) slot for a full-duplex terminal, and schedule a UL transmission for the terminal within a time-frequency range of the UL subband. However, the UL transmission may segment UL resources within the UL slot, thus affecting system performance.

### SUMMARY

The present disclosure provides a method and an apparatus for uplink (UL) transmission scheduling, a communication device, a communication system, and a storage medium.

According to a first aspect of embodiments of the present disclosure, a method for UL transmission scheduling is provided. The method includes:
determining, by a terminal, that a UL transmission occupies a first time unit and a second time unit; and
determining, by the terminal, a frequency domain resource occupied by the UL transmission within the first time unit and/or the second time unit.

According to a second aspect of embodiments of the present disclosure, a method for UL transmission scheduling is provided. The method includes:
determining, by a network device, a first time unit and a second time unit occupied by a UL transmission of a terminal; and
determining, by the network device, a frequency domain resource occupied by the UL transmission within the first time unit and/or the second time unit.

According to a third aspect of embodiments of the present disclosure, a method for UL transmission scheduling is provided. The method includes at least one of:
determining, by the network device, that a UL transmission occupies a first time unit and a second time unit, and sending first information, in which the first information indicates frequency domain resource occupied by the UL transmission within the first time unit and/or the second time unit; or
receiving, by the terminal, first information, and determining, based on the first information, a frequency domain resource occupied by a UL transmission within a first time unit and/or a second time unit.

According to a fourth aspect of embodiments of the present disclosure, a first communication apparatus is provided. The apparatus includes:
a processing module, configured to determine that a UL transmission occupies a first time unit and a second time unit, and determine frequency domain resource occupied by the UL transmission within the first time unit and/or the second time unit.

According to a fifth aspect of embodiments of the present disclosure, a communication device is provided. The device includes:
one or more processors;
in which the one or more processors are configured to invoke instructions to cause the communication device to implement the method according to the first aspect, or to implement the method according to the second aspect.

According to a sixth aspect of embodiments of the present disclosure, a communication system is provided. The system includes: a terminal configured to implement the method according to the first aspect, and a network device configured to implement the method according to the second aspect.

According to a seventh aspect of embodiments of the present disclosure, a storage medium is provided. The storage medium stores instructions that, when run on a communication device, cause the communication device to implement the method according to the first aspect, or to implement the method according to the second aspect.

### BRIEF DESCRIPTION OF THE DRAWINGS

The above-mentioned and/or additional aspects and advantages of the present disclosure will become apparent and readily appreciated from the following description of embodiments, taken in combination with the accompanying figures.
FIG. 1 is a schematic diagram illustrating an architecture of a communication system according to an embodiment of the present disclosure.
FIG. 2A to FIG. 2G are schematic diagrams respectively illustrating a downlink (DL) slot according to an embodiment of the present disclosure.
FIG. 3A to FIG. 3B are interaction schematic diagrams respectively illustrating a method for uplink (UL) transmission scheduling according to an embodiment of the present disclosure.
FIG. 4A to FIG. 4E are flowcharts respectively illustrating a method for UL transmission scheduling according to another embodiment of the present disclosure.
FIG. 5A to FIG. 5F are flowcharts respectively illustrating a method for UL transmission scheduling according to another embodiment of the present disclosure.
FIG. 6 is a schematic diagram illustrating a UL transmission after resource shift according to an embodiment of the present disclosure.
FIG. 7 is a block diagram illustrating a communication apparatus according to an embodiment of the present disclosure.
FIG. 8A is a block diagram illustrating a communication device according to an embodiment of the present disclosure.
FIG. 8B is a block diagram illustrating a chip according to an embodiment of the present disclosure.

### DETAILED DESCRIPTION

The method of the present disclosure can be used to solve the technical problem that uplink (UL) resources within a UL slot are segmented.

Embodiments of the present disclosure provide a method and an apparatus for UL transmission scheduling, a communication device, a communication system, and a storage medium.

In a first aspect, the embodiments of the present disclosure provide a method for UL transmission scheduling. The method includes: determining, by a terminal, that a UL transmission occupies a first time unit and a second time unit; and determining, by the terminal, a frequency domain resource occupied by the UL transmission within the first time unit and/or the second time unit.

In the above embodiments, the terminal performs at least one of the two steps: determining that the UL transmission occupies the first time unit and the second time unit; and determining the frequency domain resource occupied by the UL transmission within the first time unit and/or the second time unit. Thus, in the embodiments of the present disclosure, when the UL transmission spans two types of time units, the frequency domain resources occupied by the UL transmission within the two types of time units may be shifted, so that the frequency domain resources within the time unit may be used consecutively, the problem of the UL resources within the slot being segmented is solved, and system performance is improved.

In combination with some embodiments of the first aspect, in some embodiments, the terminal receives first information, in which the first information indicates the frequency domain resource occupied by the UL transmission within the first time unit and/or the second time unit; and the terminal determines the frequency domain resource occupied by the UL transmission within the first time unit and/or the second time unit based on the first information.

In the above embodiments, the indication information may explicitly indicate the offset of the frequency domain resource occupied by the UL transmission within the first time unit and/or the second time unit, so that the frequency domain resources within the time unit may be used consecutively, the problem of the UL resource within the slot being segmented is solved.

In combination with some embodiments of the first aspect, in some embodiments, the terminal determines that a first transmission of the UL transmission is located within the first time unit, and determines, based on the first information, the frequency domain resource occupied by the UL transmission within the second time unit.

In the above embodiments, when the first transmission is located within a subband based full duplex (SBFD) slot, the indication information may explicitly indicate the situation of shifting the frequency domain resource occupied by the UL transmission within a non-SBFD slot, so that the frequency domain resources within the non-SBFD slot may be used consecutively, the problem of UL resources within the non-SBFD slot being segmented is solved.

In combination with some embodiments of the first aspect, in some embodiments, the terminal determines that a first transmission of the UL transmission is located within the second time unit, and determines, based on the first information, the frequency domain resource occupied by the UL transmission within the first time unit.

In the above embodiments, when the first transmission is located within the non-SBFD slot, the indication information may explicitly indicate the offset of the frequency domain resource occupied by the UL transmission within the SBFD slot, so that the frequency domain resources within the SBFD slot may be used consecutively, the problem of UL resources within the SBFD slot being segmented is solved.

In combination with some embodiments of the first aspect, in some embodiments, the terminal receives a radio resource control (RRC), in which the RRC includes the first information; the terminal receives downlink control information (DCI), in which the DCI includes the first information; the terminal receives a media access control (MAC) control element (CE), in which the MAC CE includes the first information; or the terminal receives a system information block (SIB), in which the SIB includes the first information.

In the above embodiments, the network device may indicate the first information to the terminal in a plurality of ways, so that the terminal may explicitly know the offset of the frequency domain resource occupied by the UL transmission within the first time unit and/or the second time unit, so that the frequency domain resources within the time unit may be used consecutively, the problem of the UL resource within the slot being segmented is solved.

In combination with some embodiments of the first aspect, in some embodiments, the first information multiplexes an idle information field in an existing signaling or information.

In the above embodiments, by multiplexing the idle information field in the existing signaling or information, there is no need to construct new information, and signaling overhead is saved.

In combination with some embodiments of the first aspect, in some embodiments, the terminal determines the frequency domain resource occupied by the UL transmission within the first time unit and/or the second time unit based on a protocol agreement.

In the above embodiments, the terminal performs shift determination based on the protocol agreement, which does not require interaction with the network device, saving resource overhead, so that the frequency domain resources within the time unit may be used consecutively, the problem of the UL resource within the slot being segmented is solved.

In combination with some embodiments of the first aspect, in some embodiments, the terminal determines a transmission occasion of the UL transmission within the first time unit based on a device identifier of the terminal; and determines the frequency domain resource occupied by the UL transmission within the first time unit and/or the second time unit based on the transmission occasion.

In the above embodiments, an association relationship between the transmission occasion and an shift manner is established. The shift manner for the frequency domain resource occupied by the UL transmission is determined based on the transmission occasion. This may enable the frequency domain resources within the time unit to be used consecutively, solve the problem of the UL resource within the slot being segmented, and make the shifting scheme more flexible, and make the shifting scheme more adaptive by associating with the transmission occasion, .

In combination with some embodiments of the first aspect, in some embodiments, the terminal obtains an index of a time unit where a first transmission of the UL transmission is located; and determines the frequency domain resource occupied by the UL transmission within the first time unit and/or the second time unit based on the index.

In the above embodiments, an association relationship between a slot index where the first transmission is located and an shift manner is established. The shift manner for the frequency domain resource occupied by the UL transmission is determined based on the slot index. This may enable the frequency domain resources within the time unit to be used consecutively, solve the problem of the UL resource within the slot being segmented, make the shifting scheme more flexible, and make the shifting scheme more adaptive by associating with the slot index.

In combination with some embodiments of the first aspect, in some embodiments, the terminal determines a frequency domain resource location occupied by a semi-statically configured UL transmission, and determines, based on the frequency domain resource location of the semi-statically configured UL transmission, the frequency domain resource occupied by the UL transmission within the first time unit and/or the second time unit.

In combination with some embodiments of the first aspect, in some embodiments, the frequency domain resource occupied by the UL transmission is adjacent to a frequency domain resource occupied by the semi-statically configured UL transmission.

In the above embodiments, by shifting the frequency domain resource occupied by the UL transmission based on the frequency domain resource location of the semi-statically configured UL transmission, the shifted frequency domain resource occupied by the UL transmission may be made adjacent to the frequency domain resource location of the semi-statically configured UL transmission, so that the frequency domain resources within the time unit may be used consecutively, and the problem of the UL resource within the slot being segmented is solved.

In combination with some embodiments of the first aspect, in some embodiments, the terminal receives the UL transmission that is dynamically scheduled or indicated, or receives the UL transmission that is semi-statically configured.

In the above embodiments, the network device may schedule the UL transmission for the terminal, so that the terminal may perform stable transmission of UL data or signals on the configured resources.

In a second aspect, embodiments of the present disclosure provide a method for UL transmission scheduling. The method includes: determining, by a network device, a first time unit and a second time unit occupied by a UL transmission of a terminal; and determining, by the network device, a frequency domain resource occupied by the UL transmission within the first time unit and/or the second time unit.

In combination with some embodiments of the second aspect, in some embodiments, the network device determines that a first transmission of the UL transmission is located within the first time unit, and determines the frequency domain resource occupied by the UL transmission within the second time unit.

In combination with some embodiments of the second aspect, in some embodiments, the network device determines that a first transmission of the UL transmission is located within the second time unit, and determines the frequency domain resource occupied by the UL transmission within the first time unit.

In combination with some embodiments of the second aspect, in some embodiments, the network device determines the frequency domain resource occupied by the UL transmission within the first time unit and/or the second time unit based on a protocol agreement.

In combination with some embodiments of the second aspect, in some embodiments, the network device determines a transmission occasion of the UL transmission within the first time unit based on a device identifier of the terminal; and determines the frequency domain resource occupied by the UL transmission within the first time unit and/or the second time unit based on the transmission occasion.

In combination with some embodiments of the second aspect, in some embodiments, the network device obtains an index of a time unit where a first transmission of the UL transmission is located; and determines the frequency domain resource occupied by the UL transmission within the first time unit and/or the second time unit based on the index.

In combination with some embodiments of the second aspect, in some embodiments, the network device determines a frequency domain resource location occupied by a semi-statically configured UL transmission, and determines, based on the frequency domain resource location of the semi-statically configured UL transmission, the frequency domain resource occupied by the UL transmission within the first time unit and/or the second time unit.

In combination with some embodiments of the second aspect, in some embodiments, the frequency domain resource occupied by the UL transmission is adjacent to a frequency domain resource occupied by the semi-statically configured UL transmission.

In combination with some embodiments of the second aspect, in some embodiments, the network device sends first information, in which the first information indicates the frequency domain resource occupied by the UL transmission within the first time unit and/or the second time unit.

In combination with some embodiments of the second aspect, in some embodiments, the network device sends an RRC, in which the RRC includes the first information; the network device sends DCI, in which the DCI includes the first information; the network device sends an MAC CE, in which the MAC CE includes the first information; or the network device sends an SIB, in which the SIB includes the first information.

In combination with some embodiments of the second aspect, in some embodiments, the network device multiplexes an idle information field in an existing signaling or information to indicate the first information.

In combination with some embodiments of the second aspect, in some embodiments, the network device dynamic schedules or indicates the UL transmission; or the network device semi-static configures the UL transmission.

In a third aspect, embodiments of the present disclosure provide a method for UL transmission scheduling. The method is performed by a communication system including a terminal and a network device, the method including at least one of: determining, by the network device, that a UL transmission occupies a first time unit and a second time unit, and sending first information, in which the first information indicates frequency domain resource occupied by the UL transmission within the first time unit and/or the second time unit; or receiving, by the terminal, first information, and determining, based on the first information, a frequency domain resource occupied by a UL transmission within a first time unit and/or a second time unit.

In combination with some embodiments of the third aspect, in some embodiments, the terminal receives first information, in which the first information indicates the frequency domain resource occupied by the UL transmission within the first time unit and/or the second time unit; and the terminal determines the frequency domain resource occupied by the UL transmission within the first time unit and/or the second time unit based on the first information.

In combination with some embodiments of the third aspect, in some embodiments, the terminal determines that a first transmission of the UL transmission is located within the first time unit, and determines, based on the first information, the frequency domain resource occupied by the UL transmission within the second time unit.

In combination with some embodiments of the third aspect, in some embodiments, the terminal determines that a first transmission of the UL transmission is located within the second time unit, and determines, based on the first information, the frequency domain resource occupied by the UL transmission within the first time unit.

In combination with some embodiments of the third aspect, in some embodiments, the network device sends an RRC, in which the RRC includes the first information; the network device sends DCI, in which the DCI includes the first information; the network device sends an MAC CE, in which the MAC CE includes the first information; or the network device sends an SIB, in which the SIB includes the first information.

In combination with some embodiments of the third aspect, in some embodiments, the network device multiplexes an idle information field in an existing signaling or information to indicate the first information.

In combination with some embodiments of the third aspect, in some embodiments, the first information multiplexes an idle information field in an existing signaling or information.

In combination with some embodiments of the third aspect, in some embodiments, the network device determines the frequency domain resource occupied by the UL transmission within the first time unit and/or the second time unit based on a protocol agreement.

In combination with some embodiments of the third aspect, in some embodiments, the network device determines a transmission occasion of the UL transmission within the first time unit based on a device identifier of the terminal; and determines the frequency domain resource occupied by the UL transmission within the first time unit and/or the second time unit based on the transmission occasion.

In combination with some embodiments of the third aspect, in some embodiments, the network device obtains an index of a time unit where a first transmission of the UL transmission is located; and determines the frequency domain resource occupied by the UL transmission within the first time unit and/or the second time unit based on the index.

In combination with some embodiments of the third aspect, in some embodiments, the network device determines a frequency domain resource location occupied by a semi-statically configured UL transmission, and determines, based on the frequency domain resource location of the semi-statically configured UL transmission, the frequency domain resource occupied by the UL transmission within the first time unit and/or the second time unit.

In combination with some embodiments of the third aspect, in some embodiments, the frequency domain resource occupied by the UL transmission is adjacent to a frequency domain resource occupied by the semi-statically configured UL transmission.

In combination with some embodiments of the third aspect, in some embodiments, the network device dynamic schedules or indicates the UL transmission; or the network device semi-static configures the UL transmission.

In a fourth aspect, embodiments of the present disclosure provide a communication apparatus. The apparatus includes: a processing module, configured to determine that a UL transmission occupies a first time unit and a second time unit, and determine frequency domain resource occupied by the UL transmission within the first time unit and/or the second time unit.

In combination with some embodiments of the fourth aspect, in some embodiments, the processing module is further configured to: determine that a first transmission of the UL transmission is located within the first time unit, and determine, based on first information, the frequency domain resource occupied by the UL transmission within the second time unit.

In combination with some embodiments of the fourth aspect, in some embodiments, the processing module is further configured to: determine that a first transmission of the UL transmission is located within the second time unit, and determine, based on the first information, the frequency domain resource occupied by the UL transmission within the first time unit.

In combination with some embodiments of the fourth aspect, in some embodiments, the processing module is further configured to: determine the frequency domain resource occupied by the UL transmission within the first time unit and/or the second time unit based on a protocol agreement.

In combination with some embodiments of the fourth aspect, in some embodiments, the processing module is further configured to: determine a transmission occasion of the UL transmission within the first time unit based on a device identifier of a terminal; and determine the frequency domain resource occupied by the UL transmission within the first time unit and/or the second time unit based on the transmission occasion.

In combination with some embodiments of the fourth aspect, in some embodiments, the processing module is further configured to: obtain an index of a time unit where a first transmission of the UL transmission is located; and determine the frequency domain resource occupied by the UL transmission within the first time unit and/or the second time unit based on the index.

In combination with some embodiments of the fourth aspect, in some embodiments, the processing module is further configured to: determine a frequency domain resource location occupied by a semi-statically configured UL transmission, and determine, based on the frequency domain resource location of the semi-statically configured UL transmission, the frequency domain resource occupied by the UL transmission within the first time unit and/or the second time unit.

In combination with some embodiments of the fourth aspect, in some embodiments, the frequency domain resource occupied by the UL transmission is adjacent to a frequency domain resource occupied by the semi-statically configured UL transmission.

In combination with some embodiments of the fourth aspect, in some embodiments, the apparatus further includes: a transceiver module.

In a case that the communication apparatus is a terminal, in combination with some embodiments of the fourth aspect, in some embodiments, the transceiver module is further configured to: receive an RRC, in which the RRC includes the first information; receive DCI, in which the DCI includes the first information; receive an MAC CE, in which the MAC CE includes the first information; or receive an SIB, in which the SIB includes the first information.

In combination with some embodiments of the fourth aspect, in some embodiments, the transceiver module is configured to: receive the UL transmission that is dynamically scheduled or indicated; or receive the UL transmission that is semi-statically configured.

In a case that the communication apparatus is a network device, in combination with some embodiments of the fourth aspect, in some embodiments, the transceiver module is further configured to: send an RRC, in which the RRC includes the first information; send DCI, in which the DCI includes the first information; send an MAC CE, in which the MAC CE includes the first information; or send an SIB, in which the SIB includes the first information.

In combination with some embodiments of the fourth aspect, in some embodiments, the transceiver module is configured to: send the UL transmission that is dynamically scheduled or indicated; or send the UL transmission that is semi-statically configured.

In combination with some embodiments of the fourth aspect, in some embodiments, the first information multiplexes an idle information field in an existing signaling or information.

In a fifth aspect, embodiments of the present disclosure provide a communication device. The communication device includes: one or more processors and one or more memories storing instructions. The processor is configured to call the instructions and cause the communication device to implement the communication methods in the first aspect, the second aspect, and the implementations of the first aspect and the second aspect.

In a sixth aspect, embodiments of the present disclosure provide a communication system. The communication system includes: a terminal configured to perform the method in the first aspect, and the methods in the implementations of the first aspect, and a network device configured to perform the method in the second aspect, and the methods in the implementations of the second aspect.

In a seventh aspect, embodiments of the present disclosure provide a storage medium. The storage medium stores instructions that, when executed on a communication device, cause the communication device to implement the communication methods in the first aspect, the implementations of the first aspect, the second aspect, and the implementations of the second aspect.

In an eighth aspect, the embodiments of the present disclosure provide a program product. When the program product is executed by a communication device, the communication device is caused to implement the communication methods in the first aspect, the implementations of the first aspect, the second aspect, and the implementations of the second aspect.

In a ninth aspect, the embodiments of the present disclosure provide a computer program. When the computer program is running on a computer, the computer is caused to implement the communication methods in the first aspect, the implementations of the first aspect, the second aspect, and the implementations of the second aspect.

It may be understood that apparatus for measurement determination, the communication device, the communication system, the storage medium, the program product, and the computer program are all used to implement the methods in the embodiments of the present disclosure. Therefore, regarding beneficial effects they may achieve, reference may made be to the beneficial effects in the corresponding methods, which will not be repeated herein.

The embodiments of the present disclosure provide a title of the invention. In some embodiments, terms such as "communication method", "method for information processing", "method for information sending" and "method for information receiving" may be used interchangeably, terms such as "communication apparatus", "apparatus for information processing", "apparatus for information sending" and "apparatus for information receiving" may be used interchangeably, and terms such as "information processing system", "communication system", "information sending system", and "information receiving system" may be used interchangeably.

The embodiments of the present disclosure are not exhaustive, but are only illustrative, and are not intended to be a specific limitation on the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the implementations in a certain embodiment may be arbitrarily combined; in addition, respective embodiments may be arbitrarily combined, for example, some or all steps of different embodiments may be arbitrarily combined, and a certain embodiment may be arbitrarily combined with the implementations of other embodiments.

In each embodiment of the present disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "a plurality of" refers to two or more.

In some embodiments, the terms "at least one of", "one or more", "a plurality of", "multiple" etc. may be used interchangeably.

In the embodiments of the present disclosure, descriptions such as "at least one of A, B, C..." and "A and/or B and/or C..." include the case where any one of A, B, C... exists alone, and also include the case of any combination of any plurality of items in A, B, C..., and each case may exist independently. For example, "at least one of A, B, and C" includes the case of A alone, B alone, C alone, the combination of A and B, the combination of A and C, the combination of B and C, and the combination of A, B, and C. For example, "A and/or B" includes the case of A alone, B alone, and the combination of A and B.

In some embodiments, expressions such as "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "including A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the present disclosure may also be applied to a structure in which the communication between the access network device, the core network device, or the network device and the terminal is replaced by the communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, the uplink channel, the downlink channel, etc. may be replaced by the side channel, and the uplink, the downlink, etc. may be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, etc. may be obtained with the consent from users.

In addition, each element, each row, or each column in the table of the embodiments of the present disclosure may be implemented as an independent embodiment, and the combination of any elements, any rows, or any columns may also be implemented as an independent embodiment.

Corresponding relationships indicated by tables in the present disclosure may be configured or predefined. A value of information in the tables is only an example, and may be configured as other values, which is not limited in the present disclosure. When corresponding relationships between information and parameters are configured, it is not always necessary to configure all corresponding relationships indicated in the tables. For example, in the tables in the present disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

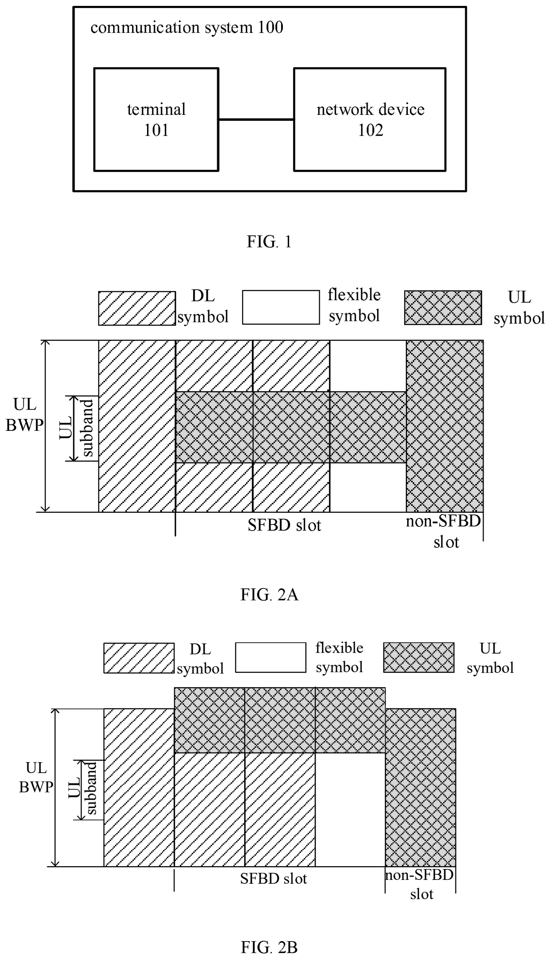

FIG. 1 is a schematic diagram illustrating an architecture of a communication system according to an embodiment of the present disclosure. As shown in FIG. 1, the communication system 100 may include a terminal 101 and a network device 102. The network device includes at least one of: an access network device, or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

It may be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art may know that with the evolution of the system architecture and the emergence of new service scenarios, the technical solution proposed in the embodiments of the present disclosure are also applicable to similar technical problems.

The following embodiments of the present disclosure may be applied to the communication system 100 or part of the subjects shown in FIG. 1, but are not limited herein. The subjects shown in FIG. 1 are examples, and the communication system may include all or part of the subjects in FIG. 1, or may include other subjects other than those shown in FIG. 1. The number and form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the present disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In embodiments of the present disclosure, the network device may configure a UL subband for a UL transmission within a DL slot for a full-duplex terminal. The network device may schedule the UL transmission for the terminal within a time-frequency range of the UL subband.

In an implementation, a size and a frequency domain location of the UL subband configured by the network device are different from an active UL bandwidth part (BWP). For example, the UL subband configured by the network device may be completely included in the frequency domain range of the UL BWP, as shown in FIG. 2A. For another example, the UL subband configured by the network device may not be completely included in the frequency domain range of the UL BWP, that is, a part of the UL subband exceeds the frequency range of the UL BWP, as shown in FIG. 2B. For another example, the UL subband configured by the network device may be completely excluded from the frequency domain range of the UL BWP, that is, all of the UL subband is not within the frequency range of the UL BWP, which is not limited in the embodiments of the present disclosure.

In some implementations, the network device may perform an full-duplex operation within a DL slot with a time division duplexing (TDD) frequency band, that is, the network device may simultaneously schedule the DL transmission and the UL transmission.

In some implementations, when the network device performs a full-duplex operation within a DL slot, a frequency domain resource multiplexing situation for the DL transmission and the UL transmission in the DL slot may be one of the following situations 1-3, which is not limited in the embodiments of the present disclosure.

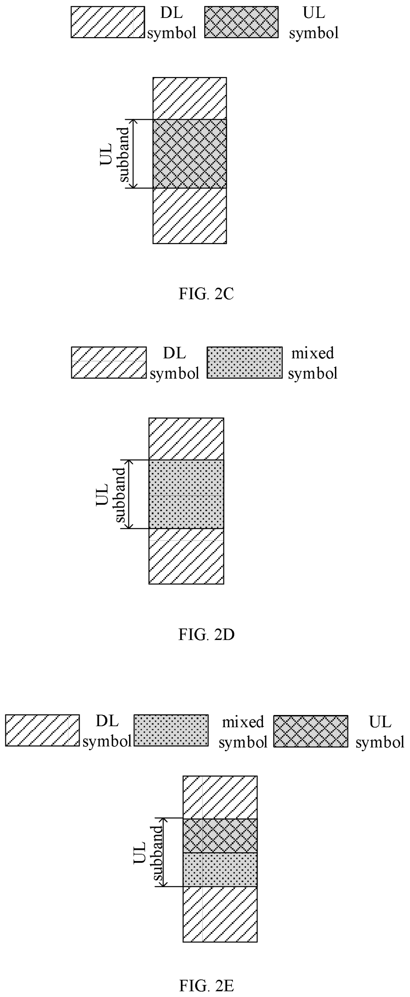

Situation 1: frequency domain resources used for the DL transmission and the UL transmission within the DL slot are independent of each other and do not overlap, as shown in FIG. 2C.

Situation 2: frequency domain resources used for the DL transmission and the UL transmission within the DL slot completely overlap, as shown in FIG. 2D.

Situation 3: frequency domain resources used for the DL transmission and the UL transmission within the DL slot partially overlap, as shown in FIG. 2E.

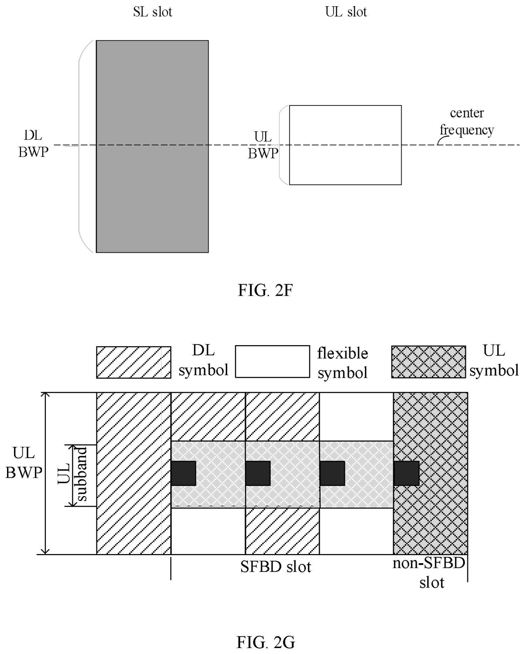

In some implementations, the DL transmission and the UL transmission within the DL slot of the TDD frequency band may be configured as DDDDDDSUUU, and a bandwidth of a DL BWP within the DL slot is different from a bandwidth of a UL BWP within a UL slot. Further, for the TDD frequency band, a center frequency point of the DL BWP and a center frequency point of the UL BWP need to be aligned, as shown in FIG. 2F.

In some implementations, a UL transmission scheduled by the network device for the terminal may be within a UL subband of an SBFD slot, or within an active UL BWP of a non-SBFD slot, which is not limited in the present disclosure. For example, the UL transmission is a physical uplink shared channel (PUSCH). If the PUSCH enables repeated transmission and the number of repeated transmissions is 4 (R=4), each repetition of the UL transmission of the PUSCH occupies the same frequency domain resources in each slot, and occupies both SBFD slots and non-SBFD slots, as shown in FIG. 2G.

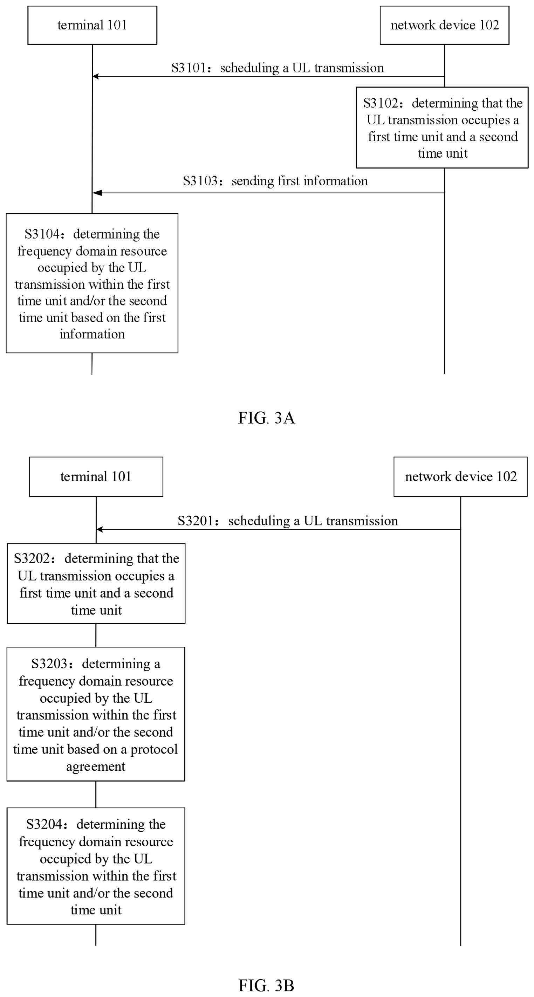

FIG. 3A is an interaction diagram illustrating a method for UL transmission scheduling according to an embodiment of the present disclosure. As shown in FIG. 3A, an embodiment of the present disclosure relates to the method for UL transmission scheduling. The method includes the following steps S3101 to S3104.

At step S3101, a network device schedules a UL transmission for a terminal.

In this embodiment of the present disclosure, the terminal has a half-duplex capability or a full-duplex capability. In an implementation, the terminal may be an SBFD-aware UE, which is not limited in the embodiments of the present disclosure.

In this embodiment of the present disclosure, the network device may perform a full-duplex operation within a DL slot of a TDD frequency band, that is, the network device may simultaneously schedule DL data and UL data.

In some implementations, the network device may perform the full-duplex operation within the DL slot of the TDD frequency band, that is, the network device may simultaneously schedule a DL transmission and a UL transmission. In an implementation, the network device may configure a UL subband for the UL transmission within the DL slot for the full-duplex terminal, and schedule the UL transmission for the terminal within a time-frequency range of the UL subband. For details about the full-duplex operation within the DL slot, reference may be made to FIG. 2C to FIG. 2E in the above embodiments, which are not repeated herein.

In some implementations, the UL transmission scheduled by the network device for the terminal may include, but is not limited to, UL data, a UL channel, or a UL signal.

In some implementations, the network device may dynamically schedule or indicate the UL transmission for the terminal. In an implementation, the terminal may obtain the UL transmission scheduled or indicated by the network device. In an implementation, dynamically scheduling or indicating the UL transmission may include, but is not limited to, dynamically scheduling a dynamic grant (DG) PUSCH.

In some implementations, the network device may dynamically schedule or indicate the UL transmission for the terminal via DCI. In an implementation, the network device may dynamically schedule or indicate the UL transmission for the terminal using any one of DCI format 0-0, DCI format 0-1, DCI format 0-2, or DCI format 0-3. The type of the UL transmission and the scheduling or indication manner are not limited in the embodiments of the present disclosure.

In some implementations, the network device may semi-statically configure the UL transmission for the terminal. In an implementation, the semi-statically configured UL transmission may include, but is not limited to, a physical uplink control channel (PUCCH), a sounding reference signal (SRS), a configured grant (CG) PUSCH, etc.

In an implementation, the network device may configure the semi-static UL transmission, such as a periodic PUSCH or PUCCH, for the terminal via an RRC signaling.

At step S3102, the network device determines that the UL transmission occupies a first time unit and a second time unit.

In some implementations, the time unit may include, but is not limited to: a frame, a subframe, and a slot.

In some implementations, the UL transmission may occupy the first time unit and the second time unit, in which the first time unit and the second time unit are two different types of time units. That is, the UL transmission scheduled by the network device for the terminal may be transmitted across two types of time units. For example, each repetition of the UL transmission may occupy one time unit. For example, when the number of repetitions is 4, the first three repetitions may occupy the first time units and the last repetition may occupy the second time unit, as shown in FIG. 2G.

In some embodiments, the name of the first time unit is not limited, which may be, for example, "time unit where the UL subband is located in a DL slot", "SBFD time unit", "SBFD slot", etc.

In some embodiments, the name of the second time unit is not limited, which may be, for example, "UL time unit", "non-SBFD time unit", "non-SBFD slot", etc.

At step S3103, the network device sends first information.

In some implementations, the first information indicates frequency domain resource occupied by the UL transmission within the first time unit and/or the second time unit.

In an implementation, the first information instructs the terminal whether to shift or adjust the frequency domain resource occupied by the UL transmission within the first time unit and/or the second time unit. In an implementation, the first information instructs the terminal to shift or adjust the frequency domain resource occupied by the UL transmission within the first time unit. In an implementation, the first information instruct the terminal to shift or adjust the frequency domain resource occupied by the UL transmission within the second time unit. In an implementation, the first information instructs the terminal to shift or adjust the frequency domain resources occupied by the UL transmission within the first time unit and the second time unit. In an implementation, the first information indicates the terminal not to shift or adjust the frequency domain resources occupied by the UL transmission within the first time unit and the second time unit.

In some implementations, the first information may be an indication signaling.

In some implementations, the first information may, via different values, indicate whether to shift the frequency domain resource occupied by the UL transmission within the first time unit and/or the second time unit. For example, a value of "0" may instruct the terminal to shift the frequency domain resource occupied by the UL transmission within the first time unit or the second time unit, or a value of "1" may indicate the terminal to shift the frequency domain resource occupied by the UL transmission within the first time unit or the second time unit.

In some implementations, the first information may include indication information indicating whether to shift, and may also include a resource offset.

In some implementations, the network device may indicate the first information to the terminal via an existing signaling.

In some implementations, the network device may send an RRC, in which the RRC includes the first information. In an implementation, the terminal obtains the first information by receiving the RRC sent by the network device.

In some implementations, the network device may indicate the first information via DCI. In an implementation, the network device sends the DCI to the terminal, in which the DCI includes the first information. In an implementation, the terminal obtains the first information by receiving the DCI sent by the network device.

In some implementations, the network device may indicate the first information via an MAC CE. In an implementation, the network device sends the MAC CE to the terminal, in which the MAC CE includes the first information. In an implementation, the terminal obtains the first information by receiving the MAC CE sent by the network device.

In some implementations, the network device may indicate the first information through an SIB. In an implementation, the network device sends the SIB to the terminal, in which the SIB includes the first information. In an implementation, the terminal obtains the first information by receiving the SIB sent by the network device.

In some implementations, the network device may multiplex an idle information field or a bit in an existing signaling to indicate the first information to the terminal.

In some implementations, the network device may multiplex a used information field in an existing signaling to indicate the first information to the terminal. That is, the used information field may indicate other information and also indicate the first information.

In some implementations, the network device may construct new information, use the constructed new information as the first information, and send the first information to the terminal.

In some embodiments, the name of the first information is not limited, which may be, for example, "offset indication information", "resource adjustment indication information", "resource determination indication information", "indication information for shifting a frequency domain resource occupied by the UL transmission within the second time unit", "indication information for shifting a frequency domain resource occupied by the UL transmission within the first time unit", etc.

At step S3104, the terminal determines the frequency domain resource occupied by the UL transmission within the first time unit and/or the second time unit based on the first information.

In some implementations, the terminal may determine the frequency domain resource occupied by the UL transmission within the first time unit and/or the second time unit based on a resource offset. In an implementation, based on the resource offset, the terminal may determine a frequency domain resource that is currently configured or indicated to be occupied by the UL transmission, and may further determine another frequency domain resource that is actually occupied or allowed to be occupied by the UL transmission during actual transmission. The transmission is performed on the another frequency domain resource, that is, the frequency domain resource occupied by the UL transmission within the first time unit and/or the second time unit are shifted via the resource offset. For example, the UL transmission is currently configured or indicated to occupy frequency domain resource #1, and after applying the offset, it may occupy frequency domain resource #2 for transmission.

In some implementations, the terminal determines that a first transmission of the UL transmission is located within the first time unit, and determines a frequency domain resource actually occupied by the UL transmission within the second time unit in actual transmission based on the first information, that is, shifting the frequency domain resource occupied by the UL transmission within the second time unit based on the first indication. In an implementation, when the terminal determines that the first transmission of the UL transmission is located within an SBFD slot, if the first information indicates to shift a frequency domain resource occupied within a non-SBFD slot, the terminal may determine the frequency domain resource occupied by the UL transmission within the non-SBFD slot based on the first indication, that is, shift the frequency domain resource occupied by the UL transmission within the non-SBFD slot based on the first indication.

In some implementations, the first information may include a resource offset, and the frequency domain resource occupied by the UL transmission within the non-SBFD slot is determined based on the offset. In an implementation, the frequency domain resource actually occupied by the UL transmission within the non-SBFD slot during actual transmission is determined based on the frequency domain resource currently configured or indicated to be occupied within the non-SBFD slot and the resource offset, that is, the frequency domain resource occupied by the UL transmission within the non-SBFD slot is shifted based on the offset.

In some implementations, if the resource offset is not indicated in the first information, the frequency domain resource occupied within the non-SBFD slot may be shifted based on a protocol or a configured resource offset. For example, the frequency domain resource occupied within the non-SBFD slot may be shifted upward by a set amount or downward by a set amount.

In some implementations, after shifting the frequency domain resource occupied within the non-SBFD slot, the shifted frequency domain resource may be adjacent to a resource location of a semi-statically configured UL transmission.

In some implementations, the terminal determines that a first transmission of the UL transmission is located within the second time unit, and determines a frequency domain resource occupied by the UL transmission within the first time unit based on the first information, that is, shifts the frequency domain resource occupied by the UL transmission within the first time unit via the resource offset. In an implementation, when the terminal determines that the first transmission of the UL transmission is located within a non-SBFD slot, if the first information indicates to determine a frequency domain resource occupied by the UL transmission within an SBFD slot, that is, the terminal may shift the frequency domain resource occupied by the UL transmission within the SBFD slot based on the first indication.

In some implementations, the first information may include a resource offset, and the frequency domain resource occupied by the UL transmission within the SBFD slot is determined based on the offset, that is, the frequency domain resource occupied by the UL transmission within the SBFD slot is shifted based on the resource offset indicated by the first information.

In some implementations, if the resource offset is not indicated in the first information, the frequency domain resource occupied by the UL transmission within the SBFD slot may be determined based on a protocol or a configured resource offset, that is, the frequency domain resource occupied by the UL transmission within the SBFD slot is shifted. For example, the frequency domain resource occupied within the SBFD slot may be shifted upward by a set amount or downward by a set amount.

In some implementations, after shifting the frequency domain resource occupied within the SBFD slot, the shifted frequency domain resources may still be within the UL subband.

In some implementations, for a dynamically scheduled or indicated UL transmission, or a semi-statically configured UL transmission, the terminal may determine whether to shift the frequency domain resource occupied by the UL transmission within the first time unit and/or the second time unit based on the first indication.

In some implementations, after the terminal shifts the frequency domain resource occupied by the UL transmission within the first time unit and/or the second time unit, the terminal may use the shifted frequency domain resource for UL transmission, for example, to transmit a UL signal or a UL channel.

In some implementations, when the UL transmission exceeds a range of the UL subband, the terminal does not expect to send a UL channel or a signal within the corresponding SBFD slot. In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

In some embodiments, the terms such as "send", "emit", "report", "issue", "transmit", "bidirectional transmission", "send and/or receive" and the like may be used interchangeably.

In some embodiments, the terms such as "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc. In some embodiments, the terms "radio", "wireless", "radio access network (RAN)", "access network (AN)", "RAN-based" and the like may be used interchangeably.

In some embodiments, the terms such as "certain", "predetermined", "preset", "set", "indicated", "a", "any", "first", and the like may be used interchangeable. "Certain A", "predetermined A", "preset A", "set A", "indicated A", "a A", "any A", "first A" may be interpreted as A predefined in a protocol, or as A obtained via setting, configuration, or indication, or as certain A, a A, any A, or first A, etc., but is not limited herein.

In some embodiments, the determination or judgment may be performed by a value represented by 1 bit (0 or 1), or by a true/false value (Boolean value) represented by true or false, or by comparison of numerical values (for example, comparison with a predetermined value), but is not limited herein.

The method for UL transmission scheduling in the embodiments of the present disclosure may include at least one of step S3101 to step S3104. For example, step S3104 may be implemented as an independent embodiment, step S3101 and step S3102 may be implemented as an independent embodiment, step S3103 and step S3104 may be implemented as an independent embodiment, and step S3102, step S3103 and step S3104 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

FIG. 3B is an interaction diagram illustrating a method for UL transmission scheduling according to an embodiment of the present disclosure. As shown in FIG. 3B, an embodiment of the present disclosure relates to the method for UL transmission scheduling. The method is performed by a communication system, and the method includes the following steps S3201 to S3204.

At step S3201, a terminal receives a scheduled UL transmission.

In some implementations, a network device may schedule or indicate the UL transmission for the terminal. In an implementation, the terminal may receive the UL transmission scheduled or indicated by the network device.

At step S3202, the terminal determines that the UL transmission occupies a first time unit and a second time unit.

For implementations of step S3202, reference may be made to the implementations of step S3102 in FIG. 3A and other parts in the embodiments related to FIG. 3A, which are not repeated herein.

At step S3203, the terminal determines a frequency domain resource occupied by the UL transmission within the first time unit and/or the second time unit based on a protocol agreement.

In some embodiments, the protocol agreement may stipulate shifting a frequency domain resource occupied by the UL transmission within the first time unit (SBFD slot); or the protocol agreement may stipulate not shifting a frequency domain resource occupied by the UL transmission within the first time unit.

In some embodiments, the protocol agreement may stipulate shifting a frequency domain resource occupied by the UL transmission within the second time unit (non-SBFD slot); or the protocol agreement may stipulate not shifting the frequency domain resource occupied by the UL transmission within the second time unit.

In some implementations, the protocol agreement may stipulate shifting the frequency domain resource occupied by the UL transmission within the first time unit, and the protocol agreement may stipulate not shifting the frequency domain resource occupied by the UL transmission within the second time unit.

In some implementations, the protocol agreement may stipulate not shifting the frequency domain resource occupied by the UL transmission within the first time unit, and the protocol agreement may stipulate shifting the frequency domain resource occupied by the UL transmission within the second time unit.

In some implementations, the protocol agreement may stipulate shifting the frequency domain resource occupied by the UL transmission within the first time unit, and shifting the frequency domain resource occupied by the UL transmission within the second time unit.

At step S3204, the terminal determines the frequency domain resource occupied by the UL transmission within the first time unit and/or the second time unit.

In an implementation, the terminal determines a transmission occasion of the UL transmission within the first time unit based on a device identifier of the terminal; the terminal determines the frequency domain resource occupied by the UL transmission within the first time unit and/or the second time unit based on the transmission occasion, that is, shifting the frequency domain resource occupied by the UL transmission within the first time unit and/or the second time unit based on the transmission occasion.

In the embodiments of the present disclosure, the protocol agreement may stipulate shifting the frequency domain resource occupied by the UL transmission within the first time unit and/or the second time unit, to avoid excessive fragmentation of frequency domain resources in the UL slot.

In some implementations, the device identifier of the terminal may include, but is not limited to, a mobile equipment identification (MEID) of the terminal.

In some implementations, the terminal may obtain the device identifier of the terminal, and determine the transmission occasion of the UL transmission within the first time unit based on a mapping relationship between the device identifier and the transmission occasion. That is, UL transmissions of different terminals within the first time unit may correspond to different transmission occasions.

In some implementations, different transmission occasions may correspond to different shift manners. For example, different transmission occasions correspond to different shift directions, and an offset may be further determined based on the protocol agreement or configuration. For another example, different transmission occasions correspond to different offsets, and a shift direction may be further determined based on the protocol agreement or configuration. For another example, different transmission occasions may correspond to different shift directions and offsets.

In some implementations, the shift direction may include, but is not limited to, shifting the frequency domain resources upward or shifting the frequency domain resources downward.

In an implementation, the transmission occasion may not only indicate whether to shift the frequency domain resource for the first time unit or the second time unit, but also indicate a resource offset.

In an implementation, when the transmission occasion is in slot#1, the frequency domain resource occupied by the UL transmission within the first time unit may be shifted upward, for example, shifted upward by one offset. In an implementation, when the transmission occasion is in slot#2, the frequency domain resource occupied by the UL transmission within the second time unit may be shifted downward, for example, shifted downward by one offset. In an implementation, when the transmission occasion is in slot#3, the frequency domain resources occupied by the UL transmission within the first time unit and the second time unit may be shifted downward, for example, shifted downward by one offset. This is merely an example, and the correspondence between the transmission occasion and the shift manner is not limited in the present disclosure.

As another implementation, the terminal obtains an index of a time unit where a first transmission of the UL transmission is located; further, the terminal determines the frequency domain resource occupied by the UL transmission within the first time unit and/or the second time unit based on the index, that is, shifts the frequency domain resource occupied by the UL transmission within the first time unit and/or the second time unit based on the index.

In some implementations, the first time unit may include a plurality of SBFD slots, and the SBFD slot where the first transmission is located may be SBFD slot#1, SBFD slot#2, or SBFD slot#N.

In some implementations, an index of the SBFD slot where the first transmission is located may be obtained, and the frequency domain resource occupied by the UL transmission within the first time unit and/or the second time unit are shifted based on the SBFD slot index.

In some implementations, different SBFD slot indexes may correspond to different shift manners. In an implementation, different SBFD slot indexes correspond to different shift directions, and an offset may be further determined based on the protocol agreement or configuration. In an implementation, different SBFD slot indexes correspond to different offsets, and the shift direction may be further determined based on the protocol agreement or configuration. In an implementation, different SBFD slot indexes may correspond to different shift directions and offsets.

In an implementation, the SBFD slot index may not only indicate whether to shift the frequency domain resource for the first time unit or the second time unit, but may also indicate an offset.

In an implementation, different SBFD slot indexes correspond to frequency domain resources suitable for being occupied by the UL transmission within the SBFD slot. The frequency domain resource occupied by the UL transmission within the SBFD slot may be shifted based on the frequency domain resource currently actually occupied by the UL transmission and the frequency domain resource suitable for being occupied. For example, if the frequency domain resource currently actually occupied by the UL transmission is resource #1, and the SBFD slot index indicates that the frequency domain resource to be occupied is resource #2, then the UL transmission within the SBFD slot may be shifted from resource #1 to resource #2. This is merely an example, and the correspondence between the SBFD slot index and the shift manner is not limited in the present disclosure.

In an implementation, different SBFD slot indexes correspond to frequency domain resources suitable for being occupied by the UL transmission within the non-SBFD slot. The frequency domain resource occupied by the UL transmission within the non-SBFD slot may be shifted based on the frequency domain resource currently actually occupied by the UL transmission and the frequency domain resource suitable for being occupied. For example, if the frequency domain resource currently actually occupied by the UL transmission is resource #2, and the SBFD slot index indicates that the frequency domain resource to be occupied is resource #4, then the UL transmission within the non-SBFD slot may be shifted from resource #2 to resource #4. This is merely an example, and the correspondence between the SBFD slot index and the shift manner is not limited in the present disclosure.

As another implementation, the terminal obtains a frequency domain resource location occupied by a semi-statically configured UL transmission; further, the terminal determines, based on the frequency domain resource location of the semi-statically configured UL transmission, the frequency domain resource occupied by the UL transmission within the first time unit and/or the second time unit. That is, the frequency domain resource occupied by the UL transmission within the first time unit and/or the second time unit is shifted based on the frequency domain resource location of the semi-statically configured UL transmission. In an implementation, the terminal shifts the frequency domain resource occupied by the UL transmission within the first time unit and/or the second time unit, so that the frequency domain resource location occupied by the UL transmission within the time unit after shifting is adjacent to the frequency domain resource location occupied by the semi-statically configured UL transmission.

The method for UL transmission scheduling in the embodiments of the present disclosure may include at least one of step S3201 to step S3204. For example, step S3204 may be implemented as an independent embodiment, step S3201, step S3202, and step S3203 may be implemented as an independent embodiment, step S3202 and step S3203 may be implemented as an independent embodiment, and step S3202, step S3203 and step S3204 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

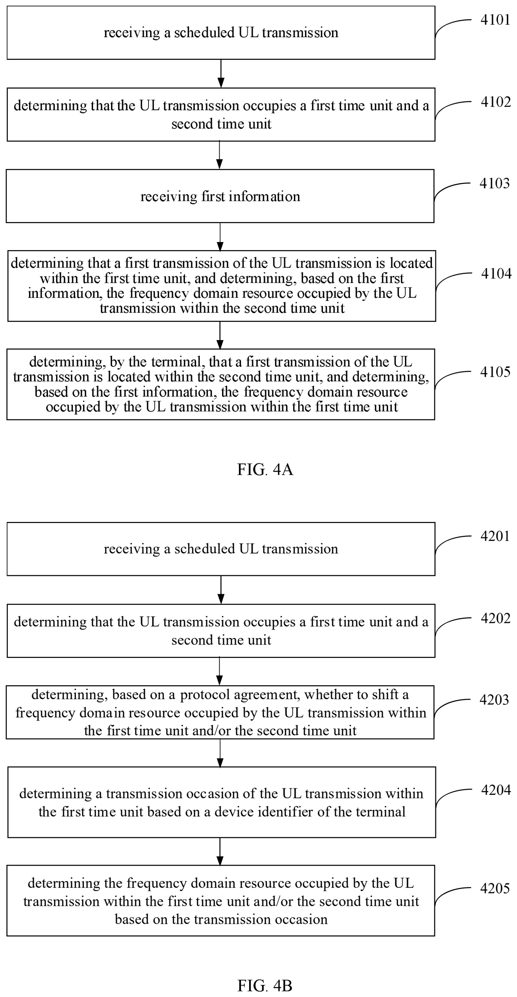

FIG. 4A is a flowchart illustrating a method for UL transmission scheduling according to an embodiment of the present disclosure. As shown in FIG. 4A, the embodiment of the present disclosure relates to the method for UL transmission scheduling. The method is performed by a terminal, and the method includes the following steps S4101 to S4105.

At step S4101, a scheduled UL transmission is received.

For implementations of step S4101, reference may be made to the implementations of step S3201 in FIG. 3B and other parts in the embodiments related to FIG. 3B, which are not repeated herein.

At step S4102, it is determined that the UL transmission occupies a first time unit and a second time unit.

For implementations of step S4102, reference may be made to the implementations of step S3102 in FIG. 3A and other parts in the embodiments related to FIG. 3A, which are not repeated herein.

At step S4103, first information is received.

For implementations of step S4103, reference may be made to the implementations of step S3103 in FIG. 3A and other parts in the embodiments related to FIG. 3A, which are not repeated herein.

At step S4104, it is determined that a first transmission of the UL transmission is located within the first time unit, and the frequency domain resource occupied by the UL transmission within the second time unit is determined based on the first information.

At step S4105, it is determined that a first transmission of the UL transmission is located within the second time unit, and the frequency domain resource occupied by the UL transmission within the first time unit is determined based on the first information.

For implementations of steps S4104 and S4105, reference may be made to the implementations of step S3104 in FIG. 3A and other parts in the embodiments related to FIG. 3A, which are not repeated herein.

The method for UL transmission scheduling in the embodiments of the present disclosure may include at least one of step S4101 to step S4105. For example, step S4104 may be implemented as an independent embodiment, step S4105 may be implemented as an independent embodiment, step S4104, and step S4105 may be implemented as an independent embodiment, step S4103, step S4104 and step S4105 may be implemented as an independent embodiment, and step S4102, step S4103, step S4104 and step S4105 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

FIG. 4B is a flowchart illustrating a method for UL transmission scheduling according to an embodiment of the present disclosure. As shown in FIG. 4B, an embodiment of the present disclosure relates to the method for UL transmission scheduling. The method is performed by a terminal, including the following steps S4201 to S4205.

At step S4201, a scheduled UL transmission is received.

For implementations of step S4201, reference may be made to the implementations of step S3101 in FIG. 3A and other parts in the embodiments related to FIG. 3A, which are not repeated herein.

At step S4202, it is determined that the UL transmission occupies a first time unit and a second time unit.

For implementations of step S4202, reference may be made to the implementations of step S3102 in FIG. 3A and other parts in the embodiments related to FIG. 3A, which are not repeated herein.

At step S4203, it is determined, based on a protocol agreement, whether to shift a frequency domain resource occupied by the UL transmission within the first time unit and/or the second time unit.

For implementations of step S4203, reference may be made to the implementations of step S3203 in FIG. 3B and other parts in the embodiments related to FIG. 3B, which are not repeated herein.

At step S4204, a transmission occasion of the UL transmission within the first time unit is determined based on a device identifier of the terminal.

At step S4205, the frequency domain resource occupied by the UL transmission within the first time unit and/or the second time unit is determined based on the transmission occasion.

For implementations of steps S4204 and S4205, reference may be made to the implementations of step S3204 in FIG. 3B and other parts in the embodiments related to FIG. 3B, which are not repeated herein.

The method for UL transmission scheduling in the embodiments of the present disclosure may include at least one of step S4201 to step S4205. For example, step S4205 may be implemented as an independent embodiment, step S4201, step S4202 and step S4203 may be implemented as an independent embodiment, step S4202 and step S4203 may be implemented as an independent embodiment, step S4204 and step S4205 may be implemented as an independent embodiment, step S4203, step S4204 and step S4205 may be implemented as an independent embodiment, and step S4202, step S4203, step S4204 and step S4205 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

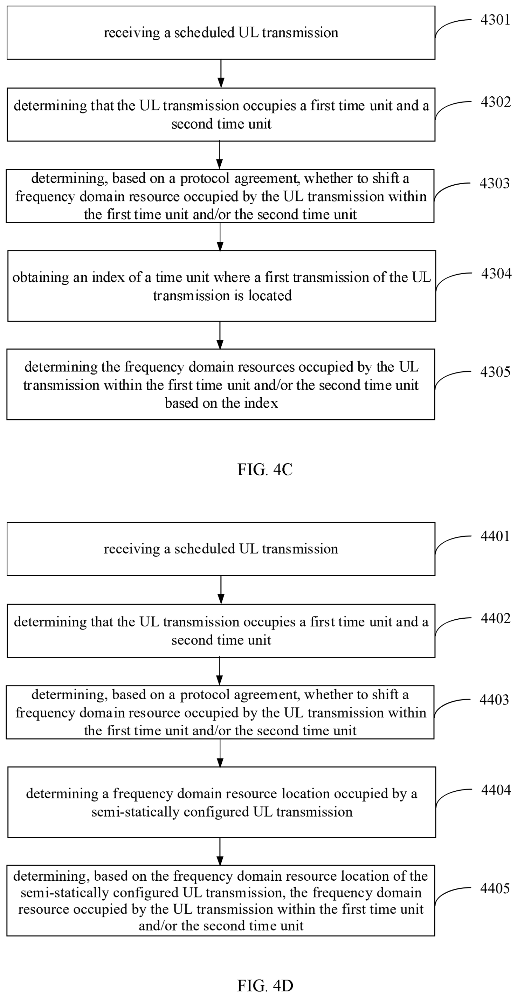

FIG. 4C is a flowchart illustrating a method for UL transmission scheduling according to an embodiment of the present disclosure. As shown in FIG. 4C, an embodiment of the present disclosure relates to the method for UL transmission scheduling. The method is performed by a terminal, and the method includes the following steps S4301 to S4305.

At step S4301, a scheduled UL transmission is received.

For implementations of step S4301, reference may be made to the implementations of step S3201 in FIG. 3B and other parts in the embodiments related to FIG. 3B, which are not repeated herein.

At step S4302, it is determined that the UL transmission occupies a first time unit and a second time unit.

For implementations of step S4302, reference may be made to the implementations of step S3102 in FIG. 3A and other parts in the embodiments related to FIG. 3A, which are not repeated herein.

At step S4303, it is determined, based on a protocol agreement, whether to shift a frequency domain resource occupied by the UL transmission within the first time unit and/or the second time unit.

For implementations of step S4303, reference may be made to the implementations of step S3203 in FIG. 3B and other parts in the embodiments related to FIG. 3B, which are not repeated herein.

At step S4304, an index of a time unit where a first transmission of the UL transmission is located is obtained.

At step S4305, the frequency domain resource occupied by the UL transmission within the first time unit and/or the second time unit is determined based on the index.

For implementations of steps S4304 and S4305, reference may be made to the implementations of step S3204 in FIG. 3B and other parts in the embodiments related to FIG. 3B, which are not repeated herein.

The method for UL transmission scheduling in the embodiments of the present disclosure may include at least one of step S4301 to step S4305. For example, step S4305 may be implemented as an independent embodiment, step S4301, step S4302 and step S4303 may be implemented as an independent embodiment, step S4302 and step S4303 may be implemented as an independent embodiment, step S4304 and step S4305 may be implemented as an independent embodiment, step S4303, step S4304 and step S4305 may be implemented as an independent embodiment, and step S4302, step S4303, step S4304 and step S4305 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

FIG. 4D is a flowchart illustrating a method for UL transmission scheduling according to an embodiment of the present disclosure. As shown in FIG. 4D, an embodiment of the present disclosure relates to the method for UL transmission scheduling. The method is performed by a terminal, and the method includes the following steps S4401 to S4405.

At step S4401, a scheduled UL transmission is received.

For implementations of step S4401, reference may be made to the implementations of step S3201 in FIG. 3B and other parts in the embodiments related to FIG. 3B, which are not repeated herein.

At step S4402, it is determined that the UL transmission occupies a first time unit and a second time unit.

For implementations of step S4402, reference may be made to the implementations of step S3102 in FIG. 3A and other parts in the embodiments related to FIG. 3A, which are not repeated herein.

At step S4403, it is determined, based on a protocol agreement, whether to shift a frequency domain resource occupied by the UL transmission within the first time unit and/or the second time unit.

For implementations of step S4403, reference may be made to the implementations of step S3203 in FIG. 3B and other parts in the embodiments related to FIG. 3B, which are not repeated herein.

At step S4404, a frequency domain resource location occupied by a semi-statically configured UL transmission is determined.

At step S4405, the frequency domain resource occupied by the UL transmission within the first time unit and/or the second time unit is determined based on the frequency domain resource location of the semi-statically configured UL transmission.

For implementations of steps S4404 and S4405, reference may be made to the implementations of step S3204 in FIG. 3B and other parts in the embodiments related to FIG. 3B, which are not repeated herein.

The method for UL transmission scheduling in the embodiments of the present disclosure may include at least one of step S4401 to step S4405. For example, step S4405 may be implemented as an independent embodiment, step S4401, step S4402 and step S4403 may be implemented as an independent embodiment, step S4402 and step S4403 may be implemented as an independent embodiment, step S4404 and step S4405 may be implemented as an independent embodiment, step S4403, step S4404 and step S4405 may be implemented as an independent embodiment, and step S4402, step S4403, step S4404 and step S4405 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

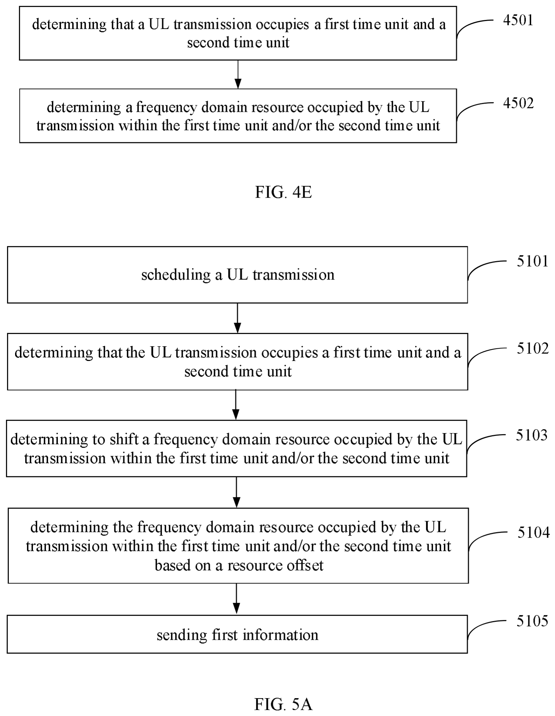

FIG. 4E is a flowchart illustrating a method for UL transmission scheduling according to an embodiment of the present disclosure. As shown in FIG. 4E, an embodiment of the present disclosure relates to the method for UL transmission scheduling. The method is performed by a terminal, including the following steps S4501 to S4502.

At step S4501, it is determined that a UL transmission occupies a first time unit and a second time unit.

At step S4502, a frequency domain resource occupied by the UL transmission within the first time unit and/or the second time unit is determined.

In an implementation, the terminal receives first information, in which the first information indicates whether to shift the frequency domain resource occupied by the UL transmission within the first time unit and/or the second time unit.

In an implementation, the terminal shifts the frequency domain resource occupied by the UL transmission within the first time unit and/or the second time unit based on the first information.

In an implementation, the terminal determines that a first transmission of the UL transmission is located within the first time unit, and shifts, based on the first information, the frequency domain resource occupied by the UL transmission within the second time unit.

In an implementation, the terminal determines that a first transmission of the UL transmission is located within the second time unit, and shifts, based on the first information, the frequency domain resource occupied by the UL transmission within the first time unit.

In an implementation, the terminal receives an RRC, in which the RRC includes the first information.

In an implementation, the terminal receives DCI, in which the DCI includes the first information.

In an implementation, the terminal receives an MAC CE, in which the MAC CE includes the first information.

In an implementation, the terminal receives an SIB, in which the SIB includes the first information.

In an implementation, the first information multiplexes an idle information field in an existing signaling or information.

In an implementation, the terminal determines whether to shift the frequency domain resource occupied by the UL transmission within the first time unit and/or the second time unit based on a protocol agreement.

In an implementation, the terminal determines to shift the frequency domain resource occupied by the UL transmission within the first time unit and/or the second time unit, and determines a transmission occasion of the UL transmission within the first time unit based on a device identifier of the terminal; and shifts the frequency domain resource occupied by the UL transmission within the first time unit and/or the second time unit based on the transmission occasion.

In an implementation, the terminal determines to shift the frequency domain resource occupied by the UL transmission within the first time unit and/or the second time unit based on the protocol agreement, and obtains an index of a time unit where a first transmission of the UL transmission is located; and shifts the frequency domain resource occupied by the UL transmission within the first time unit and/or the second time unit based on the index.

In an implementation, the terminal determines a frequency domain resource location occupied by a semi-statically configured UL transmission, and shifts, based on the frequency domain resource location of the semi-statically configured UL transmission, the frequency domain resource occupied by the UL transmission within the first time unit and/or the second time unit.

In an implementation, the terminal shifts the frequency domain resource occupied by the UL transmission within the second time unit to be adjacent to the frequency domain resource location occupied by the semi-statically configured UL transmission.

In an implementation, the terminal receives the UL transmission that is dynamically scheduled or indicated; or the terminal receives the UL transmission that is semi-statically configured.

For detailed descriptions of steps S4501 to S4502, reference may be made to the steps in any one of the above embodiments of FIG. 3A, FIG. 3B, FIG. 4A, FIG. 4B, FIG. 4C, and FIG. 4D, and other related parts in the embodiments related to FIG. 3A, FIG. 3B, FIG. 4A, FIG. 4B, FIG. 4C, and FIG. 4D.

The method for UL transmission scheduling in the embodiments of the present disclosure may include at least one of step S4501 to step S4502. For example, step S4502 may be implemented as an independent embodiment, and step S4501 and step S4502 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

FIG. 5A is a flowchart illustrating a method for UL transmission scheduling according to an embodiment of the present disclosure. As shown in FIG. 5A, an embodiment of the present disclosure relates to the method for UL transmission scheduling. The method is performed by a network device, and the method includes the following steps S5101 to S5105.

At step S5101, a UL transmission is scheduled.

For implementations of step S5101, reference may be made to the implementations of step S3101 in FIG. 3A and other parts in the embodiments related to FIG. 3A, which are not repeated herein.

At step S5102, it is determined that the UL transmission occupies a first time unit and a second time unit.

For implementations of step S5102, reference may be made to the implementations of step S3102 in FIG. 3A and other parts in the embodiments related to FIG. 3A, which are not repeated herein.

At step S5103, it is determined to shift a frequency domain resource occupied by the UL transmission within the first time unit and/or the second time unit.

In some implementations, it is determined whether to shift or adjust the frequency domain resource occupied by the UL transmission within the first time unit or the second time unit based on a protocol agreement.

In some implementations, it is determined whether to offset or adjust the frequency domain resource occupied by the UL transmission within the first time unit or the second time unit based on a higher layer signaling.

At step S5104, the frequency domain resource occupied by the UL transmission within the first time unit and/or the second time unit is determined based on a resource offset.

In some implementations, for implementations of step S5104, reference may be made to the implementations of step S3104 in FIG. 3A and other parts in the embodiments related to FIG. 3A, which are not repeated herein.

In some implementations, for implementations of step S5104, reference may be made to the implementations of step S3204 in FIG. 3B and other parts in the embodiments related to FIG. 3B, which are not repeated herein.

At step S5105, first information is sent.

For implementations of step S5105, reference may be made to the implementations of step S3103 in FIG. 3A and other parts in the embodiments related to FIG. 3A, which are not repeated herein.

In some implementations, an execution order of step S5104 and step S5105 is not limited in the present disclosure.

The method for UL transmission scheduling in the embodiments of the present disclosure may include at least one of step S5101 to step S5105. For example, step S5104 may be implemented as an independent embodiment, step S5105 may be implemented as an independent embodiment, step S5104, and step S5105 may be implemented as an independent embodiment, step S5103, step S5104 and step S5105 may be implemented as an independent embodiment, step S5102, step S5103, step S5104 and step S5105 may be implemented as an independent embodiment, and step S5101, step S5102, step S5103, step S5104 and step S5105 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

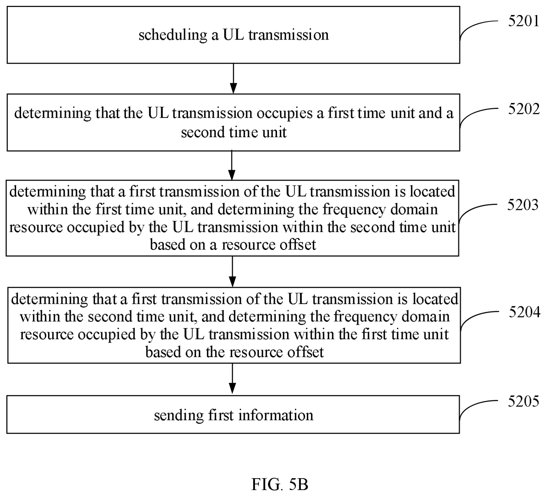

FIG. 5B is a flowchart illustrating a method for UL transmission scheduling according to an embodiment of the present disclosure. As shown in FIG. 5B, an embodiment of the present disclosure relates to the method for UL transmission scheduling. The method is performed by a network device, and the method includes the following steps S5201 to S5205.

At step S5201, a UL transmission is scheduled.

For implementations of step S5201, reference may be made to the implementations of step S3101 in FIG. 3A and other parts in the embodiments related to FIG. 3A, which are not repeated herein.

At step S5202, it is determined that the UL transmission occupies a first time unit and a second time unit.

For implementations of step S5202, reference may be made to the implementations of step S3102 in FIG. 3A and other parts in the embodiments related to FIG. 3A, which are not repeated herein.

At step S5203, it is determined that a first transmission of the UL transmission is located within the first time unit, and the frequency domain resource occupied by the UL transmission within the second time unit is determined based on a resource offset.

At step S5204, it is determined that a first transmission of the UL transmission is located within the second time unit, and the frequency domain resource occupied by the UL transmission within the first time unit is determined based on the resource offset.

For implementations of steps S5203 and S5204, reference may be made to the implementations of step S3104 in FIG. 3A and other parts in the embodiments related to FIG. 3A, which are not repeated herein.

At step S5205, first information is sent.

For implementations of step S5205, reference may be made to the implementations of step S3103 in FIG. 3A and other parts in the embodiments related to FIG. 3A, which are not repeated herein.

The method for UL transmission scheduling in the embodiments of the present disclosure may include at least one of step S5201 to step S5205. For example, step S5204 may be implemented as an independent embodiment, step S5205 may be implemented as an independent embodiment, step S5204, and step S5205 may be implemented as an independent embodiment, step S5203, step S5204 and step S5205 may be implemented as an independent embodiment, step S5202, step S5203, step S5204 and step S5205 may be implemented as an independent embodiment, and step S5201, step S5202, step S5203, step S5204 and step S5205 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

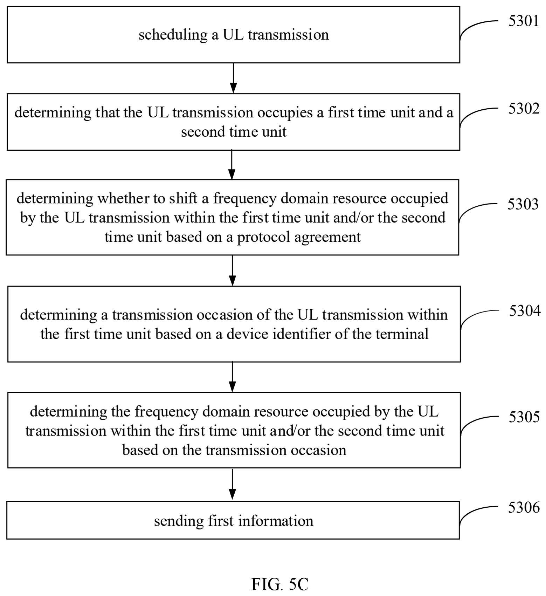

FIG. 5C is a flowchart illustrating a method for UL transmission scheduling according to an embodiment of the present disclosure. As shown in FIG. 5C, an embodiment of the present disclosure relates to the method for UL transmission scheduling. The method is performed by a network device, and the method includes the following steps S5301 to S5306.

At step S5301, a UL transmission is scheduled.

For implementations of step S5301, reference may be made to the implementations of step S3101 in FIG. 3A and other parts in the embodiments related to FIG. 3A, which are not repeated herein.

At step S5302, it is determined that the UL transmission occupies a first time unit and a second time unit.

For implementations of step S5302, reference may be made to the implementations of step S3102 in FIG. 3A and other parts in the embodiments related to FIG. 3A, which are not repeated herein.

At step S5303, it is determined whether to shift a frequency domain resource occupied by the UL transmission within the first time unit and/or the second time unit based on a protocol agreement.

For implementations of step S5303, reference may be made to the implementations of step S3203 in FIG. 3B and other parts in the embodiments related to FIG. 3B, which are not repeated herein.

At step S5304, a transmission occasion of the UL transmission within the first time unit is determined based on a device identifier of the terminal.

At step S5305, the frequency domain resource occupied by the UL transmission within the first time unit and/or the second time unit is determined based on the transmission occasion.

For implementations of steps S5304 and S5305, reference may be made to the implementations of step S3204 in FIG. 3B and other parts in the embodiments related to FIG. 3B, which are not repeated herein.

At step S5306, first information is sent.

For implementations of step S5306, reference may be made to the implementations of step S3103 in FIG. 3A and other parts in the embodiments related to FIG. 3A, which are not repeated herein.

The method for UL transmission scheduling in the embodiments of the present disclosure may include at least one of step S5301 to step S5306. For example, step S5305 may be implemented as an independent embodiment, step S5301, step S5302 and step S5303 may be implemented as an independent embodiment, step S5302 and step S5303 may be implemented as an independent embodiment, step S5304 and step S5305 may be implemented as an independent embodiment, step S5303, step S5304 and step S5305 may be implemented as an independent embodiment, step S5302, step S5303, step S5304 and step S5305 may be implemented as an independent embodiment, step S5302, step S5303, step S5304, step S5305 and step S5306 may be implemented as an independent embodiment, and step S5301, step S5302, step S5303, step S5304 and step S5305 may be implemented as an independent embodiment, and step S5301, step S5302, step S5303, step S5304, step S5305 and step S5306 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

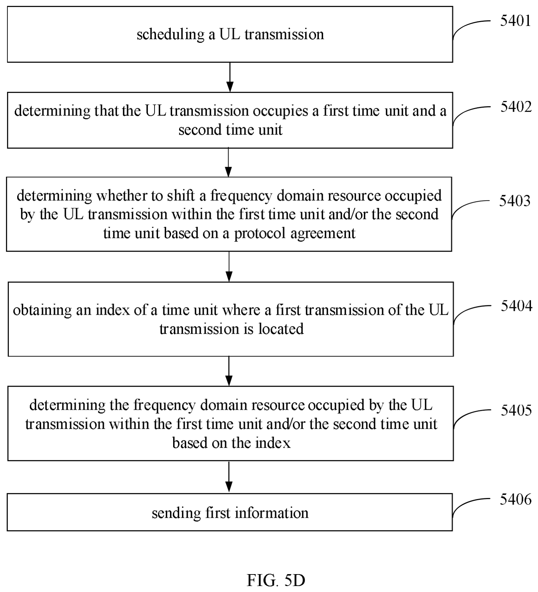

FIG. 5D is a flowchart illustrating a method for UL transmission scheduling according to an embodiment of the present disclosure. As shown in FIG. 5D, an embodiment of the present disclosure relates to the method for UL transmission scheduling. The method is performed by a network device, and the method includes the following steps S5401 to S5406.

At step S5401, a UL transmission is scheduled.

For implementations of step S5401, reference may be made to the implementations of step S3101 in FIG. 3A and other parts in the embodiments related to FIG. 3A, which are not repeated herein.

At step S5402, it is determined that the UL transmission occupies a first time unit and a second time unit.

For implementations of step S5402, reference may be made to the implementations of step S3102 in FIG. 3A and other parts in the embodiments related to FIG. 3A, which are not repeated herein.

At step S5403, it is determined whether to shift a frequency domain resource occupied by the UL transmission within the first time unit and/or the second time unit based on a protocol agreement.

For implementations of step S5403, reference may be made to the implementations of step S3203 in FIG. 3B and other parts in the embodiments related to FIG. 3B, which are not repeated herein.

At step S5404, an index of a time unit where a first transmission of the UL transmission is located is obtained.

At step S5405, the frequency domain resource occupied by the UL transmission within the first time unit and/or the second time unit is determined based on the index.

For implementations of steps S5404 and S5405, reference may be made to the implementations of step S3204 in FIG. 3B and other parts in the embodiments related to FIG. 3B, which are not repeated herein.

At step S5406, first information is sent.

For implementations of step S5406, reference may be made to the implementations of step S3103 in FIG. 3A and other parts in the embodiments related to FIG. 3A, which are not repeated herein.

The method for UL transmission scheduling in the embodiments of the present disclosure may include at least one of step S5401 to step S5406. For example, step S5405 may be implemented as an independent embodiment, step S5401, step S5402 and step S5403 may be implemented as an independent embodiment, step S5402 and step S5403 may be implemented as an independent embodiment, step S5404 and step S5405 may be implemented as an independent embodiment, step S5403, step S5404 and step S5405 may be implemented as an independent embodiment, step S5402, step S5403, step S5404 and step S5405 may be implemented as an independent embodiment, step S5402, step S5403, step S5404, step S5405 and step S5406 may be implemented as an independent embodiment, and step S5401, step S5402, step S5403, step S5404 and step S5405 may be implemented as an independent embodiment, and step S5401, step S5402, step S5403, step S5404, step S5405 and step S5406 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

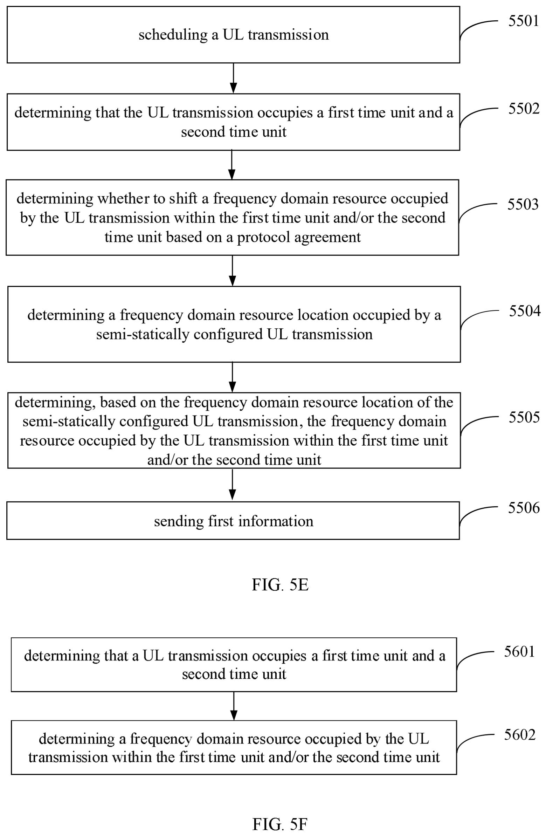

FIG. 5E is a flowchart illustrating a method for UL transmission scheduling according to an embodiment of the present disclosure. As shown in FIG. 5E, an embodiment of the present disclosure relates to the method for UL transmission scheduling. The method is performed by a network device, and the method includes the following steps S5501 to S5506.

At step S5501, a UL transmission is scheduled.

For implementations of step S5501, reference may be made to the implementations of step S3101 in FIG. 3A and other parts in the embodiments related to FIG. 3A, which are not repeated herein.

At step S5502, it is determined that the UL transmission occupies a first time unit and a second time unit.

For implementations of step S5502, reference may be made to the implementations of step S3102 in FIG. 3A and other parts in the embodiments related to FIG. 3A, which are not repeated herein.

At step S5503, it is determined whether to shift a frequency domain resource occupied by the UL transmission within the first time unit and/or the second time unit based on a protocol agreement.

For implementations of step S5503, reference may be made to the implementations of step S3203 in FIG. 3B and other parts in the embodiments related to FIG. 3B, which are not repeated herein.

At step S5504, a frequency domain resource location occupied by a semi-statically configured UL transmission is determined.

At step S5505, the frequency domain resource occupied by the UL transmission within the first time unit and/or the second time unit is determined based on the frequency domain resource location of the semi-statically configured UL transmission.

For implementations of steps S5504 and S5505, reference may be made to the implementations of step S3204 in FIG. 3B and other parts in the embodiments related to FIG. 3B, which are not repeated herein.

At step S5506, first information is sent.

For implementations of step S5506, reference may be made to the implementations of step S3103 in FIG. 3A and other parts in the embodiments related to FIG. 3A, which are not repeated herein.

The method for UL transmission scheduling in the embodiments of the present disclosure may include at least one of step S5501 to step S5506. For example, step S5505 may be implemented as an independent embodiment, step S5501, step S5502 and step S5503 may be implemented as an independent embodiment, step S5502 and step S5503 may be implemented as an independent embodiment, step S5504 and step S5505 may be implemented as an independent embodiment, step S5503, step S5504 and step S5505 may be implemented as an independent embodiment, step S5502, step S5503, step S5504 and step S5505 may be implemented as an independent embodiment, step S5502, step S5503, step S5504, step S5505 and step S5506 may be implemented as an independent embodiment, and step S5501, step S5502, step S5503, step S5504 and step S5505 may be implemented as an independent embodiment, and step S5501, step S5502, step S5503, step S5504, step S5505 and step S5506 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

FIG. 5F is a flowchart illustrating a method for UL transmission scheduling according to an embodiment of the present disclosure. As shown in FIG. 5F, an embodiment of the present disclosure relates to the method for UL transmission scheduling. The method is performed by a network device, and the method includes the following steps S5601 to S5602.

At step S5601, it is determined that a UL transmission occupies a first time unit and a second time unit.

At step S5602, a frequency domain resource occupied by the UL transmission within the first time unit and/or the second time unit is determined.

In an implementation, the network device determines that a first transmission of the UL transmission is located within the first time unit, and determines the frequency domain resource occupied by the UL transmission within the second time unit.

In an implementation, the network device determines that a first transmission of the UL transmission is located within the second time unit, and determines the frequency domain resource occupied by the UL transmission within the first time unit.

In an implementation, the network device determines the frequency domain resource occupied by the UL transmission within the first time unit or the second time unit based on a protocol agreement.

In an implementation, the network device determines to shift the frequency domain resource occupied by the UL transmission within the first time unit or the second time unit; determines a transmission occasion of the UL transmission within the first time unit based on a device identifier of the terminal; and determines the frequency domain resource occupied by the UL transmission within the second time unit based on the transmission occasion.

In an implementation, the network device obtains an index of a time unit where a first transmission of the UL transmission is located; and determines the frequency domain resource occupied by the UL transmission within the second time unit based on the index.

In an implementation, the network device determines a resource location occupied by a semi-statically configured UL transmission, and determines, based on the resource location of the semi-statically configured UL transmission, the frequency domain resource occupied by the UL transmission within the first time unit and/or the second time unit.

In an implementation, the network device shifts the frequency domain resource occupied by the UL transmission within the second time unit to be adjacent to the resource location of the semi-statically configured UL transmission.

In an implementation, the network device sends first information, in which the first information indicates the frequency domain resource occupied by the UL transmission within the first time unit and/or the second time unit.

In an implementation, the network device sends an RRC, in which the RRC includes the first information.

In an implementation, the network device sends DCI, in which the DCI includes the first information.

In an implementation, the network device sends an MAC CE, in which the MAC CE includes the first information.

In an implementation, the network device sends an SIB, in which the SIB includes the first information.

In an implementation, the network device multiplexes an idle information field in an existing signaling or information to indicate the first information.

In an implementation, the network device dynamically schedules or indicates the UL transmission; or semi-statically configures the UL transmission.

For detailed descriptions of steps S5601 to S5602, reference may be made to the steps in any one of the above embodiments of FIG. 3A, FIG. 3B, FIG. 4A, FIG. 4B, FIG. 4C, and FIG. 4D, and other related parts in the embodiments related to FIG. 3A, FIG. 3B, FIG. 4A, FIG. 4B, FIG. 4C, and FIG. 4D.

The method for UL transmission scheduling in the embodiments of the present disclosure may include at least one of step S5601 to step S5602. For example, step S5602 may be implemented as an independent embodiment, and step S5601 and step S5602 may be implemented as an independent embodiment, which is not limited herein.

In the implementations or embodiments, without conflict, the steps may be performed independently, arbitrarily combined, or in an exchanged order; implementations or examples may be arbitrarily combined, and may also be arbitrarily combined with any steps from other implementations or other embodiments.

The following is an example description of the above methods.

At a terminal side, when a UL transmission of an SBFD-aware terminal spans both an SBFD slot and a non-SBFD slot, the terminal shifts a resource occupied by the terminal within the non-SBFD slot based on an indication signaling from a base station or a predefined rule.

When a UL transmission of the terminal spans both an SBFD slot and a non-SBFD slot, the terminal may determine the frequency domain resources on the SBFD slot and the non-SBFD slot based on the following methods.

In an example 1, the SBFD-aware UE determines, via the indication signaling sent by the base station, whether the UE needs to shift the frequency domain resource occupied by the UL transmission within the non-SBFD slot or the SBFD slot, in order to reduce segmentation of UL resources.

In an embodiment, for a dynamically scheduled or indicated UL transmission, when a first transmission of the UL transmission is located within an SBFD slot, it is determined, based on the indication signaling (the first information in the above embodiments) from the base station, whether the UL transmission within the non-SBFD slot needs to be shifted; when a first transmission of the UL transmission is located within a non-SBFD slot, it is determined, based on the indication signaling from the base station, whether the UL transmission within the SBFD slot needs to be shifted. Further, the UL transmission is transmitted, which may, for example, include a UL channel or a signal.

In an implementation, the indication signaling is indicated via DCI, an MAC CE, or SIB information.

In an implementation, for indication via the DCI, the indication signaling may be indicated in a re-farming manner, that is, an existing used information field, or an idle information field or bit in the DCI may be multiplexed to indicate the indication signaling.

In an embodiment, for a semi-statically configured UL transmission, the terminal determines, based on an indication from the base station, whether a frequency domain resource location needs to be shifted. When the UL transmission exceeds the range of the UL subband, the terminal does not expect to send the UL channel or the signal within the corresponding SBFD slot.

In an example 2, the SBFD-aware UE determines, via a predefined rule, whether the frequency domain resource of the UL transmission within the non-SBFD slot or the SBFD slot needs to be shifted, to reduce segmentation of UL resources. The predefined rule is at least one of the following rules.

Predefined rule 1: the terminal determines, based on a UE ID, a resource location occupied by a transmission occasion corresponding to the UL transmission within the SBFD slot in the UL slot, for example, the upside or the downside.

Predefined rule 2: the shifted resource is adjacent to a semi-statically configured resource, for example, PUCCH, SRS, etc.

Predefined rule 3: a resource location of the corresponding UL transmission within the UL slot is determined based on a slot index where a first transmission is located.

At a base station (network device) side, when a UL transmission of an SBFD-aware terminal spans both an SBFD slot and a non-SBFD slot, the base station determines a resource occupied within the non-SBFD slot by explicitly signaling the terminal or based on a predefined rule.

When the UL transmission of the terminal spans both the SBFD slot and the non-SBFD slot, the base station determines frequency domain resources on the SBFD slot and the non-SBFD slot based on the following methods.

In an example 3, the base station determines that the frequency domain resource of the UL transmission within the non-SBFD slot or the SBFD slot need to be shifted, and sends an indication signaling to the SBFD-aware UE, indicating whether the frequency domain resource of the UL transmission within the non-SBFD slot or the SBFD slot need to be shifted, to reduce segmentation of UL resources. In an implementation, the manner in which the base station shifts the frequency domain resource of the UL transmission within the non-SBFD slot or the SBFD slot is the same as that on the terminal device side, which is not repeated herein.

In an example 4, the base station determines, via a predefined rule, whether the frequency domain resource of the UL transmission within the non-SBFD slot or the SBFD slot need to be shifted, to reduce segmentation of UL resources. The predefined rule is the same as that on the terminal device side, which is not repeated herein.

In an example 5, the terminal is a Rel-18 or later version terminal, having a half-duplex capability or a full-duplex capability, which is not limited in the present disclosure. It is assumed that the base station performs a full-duplex operation within a DL slot of a TDD frequency band, that is, the base station simultaneously schedules DL data and UL data. When performing the full-duplex operation, the base station adopts one of the following methods, which is also not limited in the present disclosure.

In method 1, frequency domain resources used for DL transmission and UL transmission within the DL slot are independent of each other and do not overlap, as shown in FIG. 2C.

In method 2, frequency domain resources used for DL transmission and UL transmission within the DL slot completely overlap, as shown in FIG. 2D.

In method 3, frequency domain resources used for DL transmission and UL transmission within the DL slot partially overlap, as shown in FIG. 2E.

A TDD UL-DL configuration of the current system is DDDDDDSUUU, and a bandwidth of a DL BWP within the DL slot is different from a bandwidth of a UL BWP in the UL slot. For a TDD frequency band, a center frequency point of the DL BWP and a center frequency point of the UL BWP need to be aligned. FIG. 2F is a specific example of a DL BWP and UL BWP configuration.

In some implementations, the base station schedules the UL transmission for the SBFD-aware UE via DCI format 0-0, DCI format 0-1, DCI format 0-2, DCI format 0-3, or any other DCI used for scheduling UL transmission. Alternatively, the base station configures a periodically transmitted PUSCH or PUCCH for the terminal via an RRC signaling. The UL transmission type and the indication manner are not limited in the present disclosure. The UL transmission may be within a UL subband of an SBFD slot, or within an active UL BWP of a non-SBFD slot, which is not limited in the present disclosure. For example, taking PUSCH as an example, and assuming that the PUSCH is enabled repeated transmission and R=4.

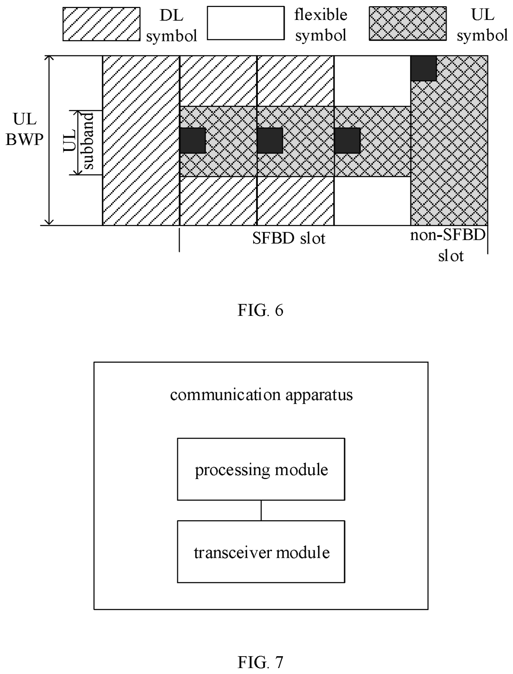

In some implementations, according to the above methods, shifting the frequency domain resource occupied by the PUSCH within the non-SBFD slot may be shown in FIG. 6, thus reducing excessive fragmentation of the UL frequency domain resources within the non-SBFD slot, enabling consecutive occupation of the UL frequency domain resources, and improving resource utilization and system performance.

The embodiments of the present disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In the embodiments of the present disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7 is a block diagram illustrating a first communication apparatus according to an embodiment of the present disclosure. As shown in FIG. 7, the communication apparatus includes: a processing module and a sending module.

When the communication apparatus is a terminal in any of the above methods, the processing module is configured to determine that a UL transmission occupies a first time unit and a second time unit. In an implementation, the processing module is further configured to shift a frequency domain resource occupied by the UL transmission within the first time unit and/or the second time unit. In an implementation, the processing module is configured to perform steps related to determining that a UL transmission occupies the first time unit and the second time unit and determining frequency domain resource occupied by the UL transmission within the first time unit and/or the second time unit, that are performed by the terminal 101 in any of the above methods, which are not repeated herein. In an implementation, the communication apparatus further includes at least one of a sending module and a receiving module. The sending module is configured to perform steps related to sending performed by the terminal 101 in any of the above methods; the receiving module is configured to perform steps related to receiving performed by the terminal 101 in any of the above methods, which are not repeated herein.

When the communication apparatus is the network device in any of the above methods, the processing module may be configured to perform steps related to determining that the UL transmission occupies the first time unit and the second time unit and determining frequency domain resource occupied by the UL transmission within the first time unit and/or the second time unit, that are performed by the network device 102 in any of the above methods, which are not repeated herein. In an implementation, the sending module is configured to perform steps related to sending performed by the network device 102 in any of the above methods, which are not repeated herein.

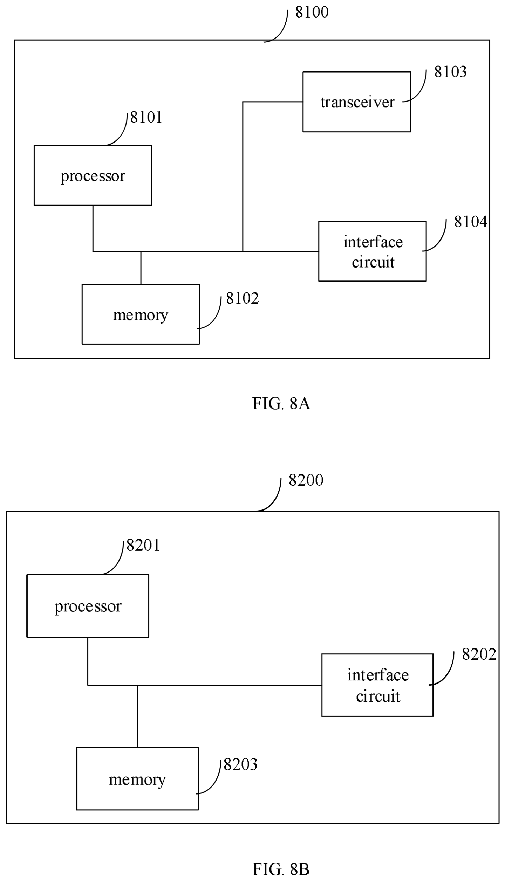

FIG. 8A is a block diagram illustrating a communication device 8100 according to an embodiment of the present disclosure. The communication device 8100 may be a network device (e.g., an access network device, a core network device, etc.), a terminal (e.g., a user equipment), a chip, a system on chip or a processor that supports the network device to implement any one of the above methods, or a chip, a system on chip or a processor that supports the terminal to implement any one of the above methods. The communication device 8100 may be configured to implement the methods described in the method embodiments, and reference may be made to descriptions in the method embodiments.

As shown in FIG. 8A, the communication device 8100 may include one or more processors 8101. The processor 8101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), execute a computer program, and process data of the computer program. The processor 8101 is configured to call instructions so that the communication device 8100 may implement any one of the above methods.

In some embodiments, the communication device 8100 may also include one or more memories 8102 for storing instructions. In an implementation, all or some of the memories 8102 may also be located outside the communication device 8100.

In some embodiments, the communication device 8100 further includes one or more transceivers 8103. When the communication device 8100 includes one or more transceivers 8103, the communication steps such as sending and receiving in the above methods are performed by the transceiver 8103, and other steps are performed by the processor 8101.

In some embodiments, the transceiver may include a receiver and a transmitter, which may be separate or integrated together. In an implementation, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In an implementation, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited, and a structure of the communication device 8100 may not be limited by FIG. 8A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 8B is a block diagram of a chip 8200 according to an embodiment of the present disclosure. For a case where the communication device 8100 may be a chip or a chip system, reference may be made to the block diagram of the chip 8200 shown in FIG. 8B, which it is not limited herein.

The chip 8200 includes one or more processors 8201. The processor 8201 is configured to call the instructions to cause the chip 8200 to execute any one of the above methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send the signals to the memory 8203 or other devices. For example, the interface circuit 8202 may read the instructions stored in the memory 8203 and send the instructions to the processor 8201. In an implementation, the terms such as interface circuit, interface, transceiver pin, transceiver, etc. may be used interchangeably.

In some embodiments, the chip 8200 further includes one or more memories 8203 for storing instructions. In an implementation, all or some of the memories 8203 may be located outside the chip 8200.

The present disclosure also provides a storage medium for storing instructions. When the instructions are running on the communication device 8100, the communication device 8100 is caused to implement any one of the above methods. In an implementation, the above storage medium is an electronic storage medium. In an implementation, the above storage medium is a computer-readable storage medium, which is not limited herein. The above storage medium may also be a storage medium readable by other devices. In an implementation, the above storage medium may be a non-transitory storage medium, which is not limited to herein. The above storage medium may also be a transitory storage medium.

The present disclosure also provides a program product. When the program product is executed by the communication device 8100, the communication device 8100 is caused to implement any one of the above methods. In an implementation, the above program product is a computer program product.

The present disclosure also provides a computer program. When the computer program is running on a computer, the computer is caused to implement any one of the above methods.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered as going beyond the scope of the present disclosure.

Those skilled in the related art may clearly understand that, for a specific working process of a system, an apparatus and a unit described above reference may be made to a corresponding process in the above method embodiments, which will not be repeated herein.

The above are only implementations of the present disclosure. However, the protection scope of the present disclosure is not limited here. Changes and substitutions that may be easily considered by those skilled in the art shall be contained within the protection scope of the present disclosure. Thus, the protection scope of the present disclosure shall be subject to the protection scope of claims.

## Claims

1. A method for uplink (UL) transmission scheduling, comprising:
determining, by a terminal, that a UL transmission occupies a first time unit and a second time unit; and
determining, by the terminal, a frequency domain resource occupied by the UL transmission within the first time unit and/or the second time unit, wherein the occupied frequency domain resource is determined based on a resource offset.

2. The method according to claim 1, further comprising:
receiving, by the terminal, first information, wherein the first information indicates the frequency domain resource occupied by the UL transmission within the first time unit and/or the second time unit; and
determining, by the terminal, the frequency domain resource occupied by the UL transmission within the first time unit and/or the second time unit based on the first information.

3. The method according to claim 2, further comprising:
determining, by the terminal, that a first transmission of the UL transmission is located within the first time unit, and determining, based on the first information, the frequency domain resource occupied by the UL transmission within the second time unit.

4. The method according to claim 2, further comprising:
determining, by the terminal, that a first transmission of the UL transmission is located within the second time unit, and determining, based on the first information, the frequency domain resource occupied by the UL transmission within the first time unit.

5. The method according to claim 2, further comprising:
receiving, by the terminal, a radio resource control (RRC), wherein the RRC comprises the first information;
receiving, by the terminal, downlink control information (DCI), wherein the DCI comprises the first information;
receiving, by the terminal, a media access control (MAC) control element (CE), wherein the MAC CE comprises the first information; or
receiving, by the terminal, a system information block (SIB), wherein the SIB comprises the first information.

6. The method according to claim 5, wherein the first information multiplexes an idle information field in an existing signaling or information.

7. The method according to claim 1, further comprising:
determining, by the terminal, the frequency domain resource occupied by the UL transmission within the first time unit and/or the second time unit based on a protocol agreement.

8. The method according to claim 7, further comprising:
determining, by the terminal, a transmission occasion of the UL transmission within the first time unit based on a device identifier of the terminal; and
determining, by the terminal, the frequency domain resource occupied by the UL transmission within the first time unit and/or the second time unit based on the transmission occasion.

9. The method according to claim 7, further comprising:
obtaining, by the terminal, an index of a time unit in which a first transmission of the UL transmission is located; and
determining, by the terminal, the frequency domain resource occupied by the UL transmission within the first time unit and/or the second time unit based on the index.

10. The method according to claim 7, further comprising:
determining, by the terminal, a frequency domain resource location occupied by a semi-statically configured UL transmission, and determining, based on the frequency domain resource location of the semi-statically configured UL transmission, the frequency domain resource occupied by the UL transmission within the first time unit and/or the second time unit.

11. The method according to claim 10, wherein the frequency domain resource occupied by the UL transmission is adjacent to a frequency domain resource occupied by the semi-statically configured UL transmission.

12. The method according to any one of claims 1 to 11, further comprising:
receiving, by the terminal, the UL transmission that is dynamically scheduled or indicated; or
receiving, by the terminal, the UL transmission that is semi-statically configured.

13. A method for uplink (UL) transmission scheduling, comprising:
determining, by a network device, a first time unit and a second time unit occupied by a UL transmission of a terminal; and
determining, by the network device, a frequency domain resource occupied by the UL transmission within the first time unit and/or the second time unit, wherein the occupied frequency domain resource is determined based on a resource offset.

14. The method according to claim 13, further comprising:
determining, by the network device, that a first transmission of the UL transmission is located within the first time unit, and determining the frequency domain resource occupied by the UL transmission within the second time unit.

15. The method according to claim 13, further comprising:
determining, by the network device, that a first transmission of the UL transmission is located within the second time unit, and determining the frequency domain resource occupied by the UL transmission within the first time unit.

16. The method according to claim 13, further comprising:
determining, by the network device, the frequency domain resource occupied by the UL transmission within the first time unit and/or the second time unit based on a protocol agreement.

17. The method according to claim 16, further comprising:
determining, by the network device, a transmission occasion of the UL transmission within the first time unit based on a device identifier of the terminal; and
determining, by the network device, the frequency domain resource occupied by the UL transmission within the first time unit and/or the second time unit based on the transmission occasion.

18. The method according to claim 16, further comprising:
obtaining, by the network device, an index of a time unit in which a first transmission of the UL transmission is located; and
determining, by the network device, the frequency domain resource occupied by the UL transmission within the first time unit and/or the second time unit based on the index.

19. The method according to claim 17 or 18, further comprising:
determining, by the network device, a frequency domain resource location occupied by a semi-statically configured UL transmission, and determining, based on the frequency domain resource location of the semi-statically configured UL transmission, the frequency domain resource occupied by the UL transmission within the first time unit and/or the second time unit.

20. The method according to claim 19, wherein the frequency domain resource occupied by the UL transmission is adjacent to a frequency domain resource occupied by the semi-statically configured UL transmission.

21. The method according to any one of claims 13 to 20, further comprising:
sending, by the network device, first information, wherein the first information indicates the frequency domain resource occupied by the UL transmission within the first time unit and/or the second time unit.

22. The method according to claim 21, further comprising:
sending, by the network device, a radio resource control (RRC), wherein the RRC comprises the first information;
sending, by the network device, downlink control information (DCI), wherein the DCI comprises the first information;
sending, by the network device, a media access control (MAC) control element (CE), wherein the MAC CE comprises the first information; or
sending, by the network device, a system information block (SIB), wherein the SIB comprises the first information.

23. The method according to claim 22, further comprising:
multiplexing, by the network device, an idle information field in an existing signaling or information to indicate the first information.

24. The method according to any one of claims 13 to 20, further comprising:
dynamically scheduling or indicating, by the network device, the UL transmission; or
semi-statically configuring, by the network device, the UL transmission.

25. A method for uplink (UL) transmission scheduling, performed by a communication system comprising a terminal and a network device, the method comprising at least one of:
determining, by the network device, that a UL transmission occupies a first time unit and a second time unit, and sending first information, wherein the first information indicates frequency domain resource occupied by the UL transmission within the first time unit and/or the second time unit; or
receiving, by the terminal, first information, and determining, based on the first information, a frequency domain resource occupied by a UL transmission within a first time unit and/or a second time unit.

26. A communication apparatus, comprising:
a processing module, configured to determine that a UL transmission occupies a first time unit and a second time unit, and determine frequency domain resource occupied by the UL transmission within the first time unit and/or the second time unit.

27. A communication device, comprising:
one or more processors;
wherein the one or more processors are configured to invoke instructions to cause the communication device to implement the method according to any one of claims 1 to 12, or to implement the method according to any one of claims 13 to 24.

28. A communication system, comprising a terminal configured to implement the communication method according to any one of claims 1 to 12, and a network device configured to implement the communication method according to any one of claims 13 to 24.

29. A storage medium storing instructions that, when run on a communication device, cause the communication device to implement the method according to any one of claims 1 to 12, or to implement the method according to any one of claims 13 to 24.
